# EUROPEAN PATENT SPECIFICATION

(11) **EP 3 149 112 B1**
(45) Date of publication and mention of the grant of the patent: **03.07.2019**
(21) Application number: 15726109.0
(22) Date of filing: 28.05.2015
(51) Int. Cl.: C10G 3/00

(54) **METHOD FOR REVAMPING A CONVENTIONAL REFINERY OF MINERAL OILS INTO A BIOREFINERY**
VERFAHREN ZUR MODERNISIERUNG EINER KONVENTIONELLEN RAFFINERIE VON MINERALÖLEN IN EINE BIORAFFINERIE
PROCÉDÉ DE MODERNISATION D'UNE RAFFINERIE CLASSIQUE D'HUILES MINÉRALES EN BIORAFFINERIE

(30) Priority: 29.05.2014 IT MI20140992
(43) Date of publication of application: 05.04.2017
(73) Proprietor: ENI S.p.A., 00144 Rome (IT)
(72) Inventor: RISPOLI, Giacomo Fernando, I-00136 Roma (IT); BELLUSSI, Giuseppe, I-29122 Piacenza (PC) (IT); CALEMMA, Vincenzo, I-20097 San Donato Milanese (MI) (IT); DE ANGELIS, Alberto Renato, I-20025 Legnano (MI) (IT)
(74) Representative: Bottero, Carlo
(86) International application number: PCT/EP2015/061813
(87) International publication number: WO 2015/181279

(56) References cited:
- EP-A1- 2 628 781
- WO-A1-2014/033762
- US-A1- 2013 310 620

## Description

The invention relates to a method for revamping a conventional refinery of mineral oils into a new biorefinery, wherein said biorefinery is characterized by a production scheme which enables the treatment of raw materials of a biological origin for the production of biofuels with a high productivity and reduced hydrogen consumption.

This method allows the re-use of existing plants, allowing, in particular, the revamping of hydrodesulfuration plants into production plants of hydrocarbon fractions which can be used as diesel fuel, or as diesel fuel components, starting from a mixture of a biological origin containing triglycerides possibly with aliquots of free fatty acids, wherein said production, through suitable modifications and integrations of the existing plant, is effected with a high productivity and reduction or elimination of corrosion phenomena. Said corrosion phenomena are generally due to chlorine impurities normally present in feedstocks containing triglycerides.

Together with diesel fuel, the plants deriving from the revamping of desulfuration plants according to the method of the present invention, also produce aliquots of naphtha, which is consequently also a product deriving from mixtures of a biological origin.

Through this method, existing equipment of hydrodesulfuration units can be re-used by means of rearrangements and integrations which allow a new configuration to be obtained, suitable for effecting processes for the production of fuel bases from biological mixtures, in particular for the production of diesel and jet fuel: these rearrangements and integrations are capable, with reduced costs, of providing a higher efficiency than that of transformation plants of triglycerides, whether they have been specifically constructed for a direct transformation process of glycerides into hydrocarbon fractions by means of hydrodeoxygenation followed by hydroisomerization, or obtained by the rearrangement of existing plants as described in WO2014/033762.

Furthermore, as the hydrodesulfuration unit is normally inserted in a refinery context, its rearrangement to a transformation unit of biological charges into diesel allows products and by-products of the same refinery to be exploited in the transformation process of biological material, by integration of the refinery units producing them with the new configuration and the new use of the hydrodesulfuration unit, also enabling the use of all the auxiliary services normally present in a refinery.

The use of vegetable oils in diesel engines goes back to Rudolf Diesel, who, in 1900, demonstrated the capacity of diesel engines of functioning with peanut oil. During the second world war, both palm oil and peanut oil were used in Africa as fuel for military vehicles. After the war, technological development led to an almost exclusive use of fuels deriving from petroleum; in addition, diesel engines were enormously improved, mainly with respect to the injectors and control systems, to such an extent that there was little flexibility for the use of fuels different from gas oil. At the same time, vegetable fuels were progressively abandoned due to the high production cost and inconstancy in the product quality.

During the oil crisis of the seventies', attention was refocused on the use of vegetable oils as diesel fuels, but this was difficult for various reasons (formation of crusting in the combustion chamber, blockage of the injectors, dilution of the lubricant). Research activities were therefore directed towards the preparation, starting from vegetable oils, of methyl or ethyl esters and their use in diesel engines. Methyl and ethyl esters of fatty acids are obtained from vegetable oils by transesterification with methanol or ethanol.

An alternative approach for the conversion of vegetable oils was proposed in the eighties' and consists in the forced hydrogenation of these to produce hydrocarbon fractions with a boiling point compatible with diesel fuels obtained from oil. The forced hydrogenation of vegetable oils causes the removal of oxygen with the contemporaneous formation of a mixture of H₂O, CO₂ and CO, in reciprocal ratios varying according to the operative conditions. The starting components are thus prevalently transformed into hydrocarbons with respect to triglycerides, and also fatty acids and glycerine. Small quantities of free alcohols can be formed together with the hydrocarbons.

The forced hydrogenation reaction of fatty oils to produce liquid fuels was studied for example, again in the eighties', by Nunes et al., who, in the article entitled "Hydrocraquage sous pression d'une huile de soja: procédé d'étude et allure générale de la transformation" (Rev. Inst. Fr. Pet. Of 1086, vol. 41, page 421 onwards) describe the hydrocracking of soya oil with a bifunctional catalyst. At a temperature higher than 673 K, decarbonylation and decarboxylation of the fatty acids are observed, together with a strong hydrogenolysis due to the presence of the metal catalyst. The main products are linear-chain hydrocarbons.

J. Gusmao et al. (Utilization of vegetable oils as an alternative source for diesel-type fuel: hydrocracking on reduced Ni/SiO2 and sulphided Ni-Mo/Al2O3, Catalysis Today 5 of 1989 page 533 onwards) shows how, in the hydrogenation of soya oil, the hydrocarbon fraction obtained mainly consists of linear paraffins (96% molar of C₁₅ - C₁₆ - C₁₇ - C₁₈).

US patent 4,992,605 describes a process for producing hydrocarbon fractions in the C₁₅-C₁₈ range by the hydrogenation of vegetable oils such as sunflower oil, rape oil, canola oil, palm oil, or fatty oils contained in the pulp of pine trees (tall oil). This hydrocarbon fraction prevalently consists of linear paraffins (C₁₅-C₁₈) and is characterized by a high cetane number, which is such that it can be used as a cetane improver.

In "Hydroprocessed vegetable oils for diesel fuel improvement", Bioresources Technology 56 (1996), pages 13 to 18, the application described in US 4,992,605 is summarized, on a laboratory scale to produce a hydrogenated product starting from canola oil.

EP 1396531 describes a process for the production of hydrocarbon components from mixtures of a vegetable or animal origin. The formation of a mixture with a content of iso-paraffins of 73%, is described. The process comprises a pre-hydrogenation step, a hydrodeoxygenation step (HDO) and an isomerization step which operates using the countercurrent flow principle.

EP 1728844 describes a process for the production of hydrocarbon components from mixtures of a vegetable or animal origin. The process comprises a pretreatment step of the mixture of a vegetable origin for removing contaminants, such as, for example, alkaline metals, followed by a hydrodeoxygenation (HDO) step and possibly an isomerization step.

EP 2084245 describes a process for the production of a hydrocarbon mixture that can be used as diesel fuel or diesel component by the hydrodeoxygenation of a mixture of a biological origin containing fatty acid esters possibly with aliquots of free fatty acids, such as for example vegetable oils such as sunflower oil, rape oil, canola oil, palm oil, or fatty oils contained in the pulp of pine trees (tall oil), followed by hydroisomerization on specific catalysts, which allows hydrocarbon mixtures to be obtained in which the content of iso-paraffins can exceed 80%, the remaining percentage being n-paraffins.

Current regulations require that fuel components from renewable sources, for example from mixtures of a biological origin containing fatty acid esters, be present in fuels for a percentage of around 4.5% (referring to calorific value) for 2012, which should be equal to 5.0% within 2014 and will reach 10% in 2020, according to Dlg. n° 28 of 2011 which implements the Europe Directive 2009/28/CE.

The biological diesel component which is currently used in most cases is FAME (Fatty Acid Methyl Ester) i.e. a mixture of fatty acid methyl esters deriving from the transesterification with methanol of triglycerides contained in vegetable oils. For as much as it is widely used, FAME has disadvantages from a quality point of view, due to the low calorific value (about 38kJ/kg) and poor cold properties (Cloud point from -5°C to +15°C). Furthermore, as FAME has a greater hydrophilicity with respect to homologous gasoils of a mineral origin, it can cause pollution in tanks. It also has a low stability due to the presence of double bonds on the alkyl chain and in the presence of atmospheric oxygen, it tends to form rubbers and other undesired products. The possible presence of bacteria can cause fouling, and therefore fouling of the filters. FAME also tends to dissolve in lubricating oil. For these reasons, various automobile companies are advising against the use of FAME in their engines. This results in the possibility of using FAME in a limited maximum quantity which is such as to not satisfy the standard required by the directive 2009/28/CE (RED) for the promotion of the use of energy from renewable sources and the directive 2009/30/CE (FQD) for product quality.

The necessity is therefore felt for producing higher-quality components for diesel of a biological origin, and consequently the necessity to increase the production of diesel of a biological origin, in short times, in particular using technologies which produce higher-quality components. New dedicated plants are therefore required for facing the necessity of increasing the production capacity of high-quality biological components.

In view of the construction of new plants, which require lengthy times and high investments, above all for the reactors that must operate with a high hydrogen pressure, for compressors and other machines and for the construction of a hydrogen production plant, the necessity is strongly felt for finding alternative solutions which allow the exploitation of existing production units by the revamping of pre-existing plants, with the least possible invasiveness and as economically as possible.

WO 2014/033762 describes a method for converting a conventional mineral-oil refinery into a biorefinery characterized by a production scheme which allows the treatment of raw materials of a biological origin for the production of biofuels, prevalently high-quality biodiesel: this method enables existing plants to be re-used, allowing, in particular, the revamping of a refinery containing a system comprising two hydrodesulfuration units, U1 and U2, into a biorefinery containing a production unit of hydrocarbon fractions from mixtures of a biological origin by means of hydrodeoxygenation and isomerization. The direct hydrodeoxygenation of triglycerides, however, creates, at a plant level, some problems of corrosion, due to the presence of chlorine in the feedstock, and also requires a recycling line to the hydrodeoxygenation reactor which is dimensioned so as to allow up to 80% of recycling. Said recycling is necessary due to the high exothermy of the reaction and to avoid plugging phenomena of the hydrogenation reactor caused by the formation of rubbers.

A method has now been found for transforming hydrodesulfuration units into revamping units of mixtures of a biological origin, based on triglycerides, into biocomponents for fuels, which overcomes the drawbacks revealed in the state of the art.

The new method comprises some new particular integrations and installations to be added to those described in WO 2014/033762 and which allow a biorefinery to be obtained, with a new configuration in which the limits described above relating to problems linked to both corrosion and the reaction heat in the hydrodeoxygenation transformation, are overcome. The new configuration also allows the consumption of less hydrogen and the recovery of glycerine, which in turn can be commercially exploited.

This method is therefore of particular interest within the current economic context, which envisages a reduction in the demand for oil products and refinery margins, allowing the production cycle to be modified through the transformation of already-existing hydrodesulfuration units in oil refineries into production units of hydrocarbon mixtures that can be used as fuels, from mixtures of a biological origin, at the same time overcoming the limits and problems faced by the known technical solutions.

The conversion of mixtures of a biological origin into biocomponents that can be effected in the biorefinery obtained by the method of the present invention, consists in the production of hydrocarbon fractions from mixtures of a biological origin containing glycerides, by means of their hydrolysis, hydrodeoxygenation and hydroisomerization: said conversion is indicated hereunder with the name "hydro-HDO/ISO process". The "hydro-HDO/ISO process" therefore refers to a process for producing, as main product, a hydrocarbon fraction which can be used as diesel fuel, or as diesel fuel component, starting from a mixture of a biological origin containing fatty acid esters, and possibly containing free fatty acids, which comprises the following steps:
1. Hydrolysis of the mixture of a biological origin containing glycerides to the corresponding fatty acids and glycerine (splitting);
2. Hydrodeoxygenation of the mixture containing fatty acids resulting from step (1), after removal of the glycerine;
3. Hydroisomerization of the mixture resulting from step (2), after a possible purification treatment.

In particular, the process comprises the following phases:
(a) reacting the mixture of a biological origin comprising glycerides with water at a temperature preferably within the range of 150-400°C and a pressure preferably within the range of 1-20 MPa, forming at least a mixture of fatty acids and glycerine;
(b) separating said glycerine from said mixture of fatty acids;
(c) subjecting said mixture of fatty acids to catalytic hydrodeoxygenation in the presence of hydrogen, obtaining a reaction product comprising:
   (i) at least one gaseous effluent comprising hydrogen, water vapour, CO₂ and possibly CO,
   (ii) at least one diesel hydrocarbon fraction comprising a mixture of substantially linear paraffins;
(d) separating said diesel hydrocarbon fraction from said product;
(e) subjecting the diesel hydrocarbon fraction obtained from step (d) to catalytic hydroisomerization in the presence of hydrogen, so as to convert at least a part of said linear paraffins into branched paraffins, obtaining a diesel hydrocarbon fraction with improved cold properties.

"Diesel hydrocarbon fraction" refers to a mixture of hydrocarbons having a total number of carbon atoms ranging from 9 to 22 and a boiling point at atmospheric pressure within the temperature range of hydrocarbons that typically form the diesel cut obtained from oil (180°C - 360°C), in particular the kerosene cut (C9-C14, boiling range 180°C - 240°C, so-called jet fuel) and the gasoil cut (C14-C22, boiling range 240°C - 360°C) .

In said hydro-HDO/ISO process, the mixture of a biological origin is a mixture of a vegetable or animal origin, and the fatty acid esters contained therein are fatty acid glycerides, wherein the hydrocarbon chain of the fatty acid contains from 11 to 21 carbon atoms and is mono- or poly-unsaturated.

The term glycerides refers to mono-, di- and triglycerides.

The mixtures of a biological origin can be selected from vegetable oils, vegetable fats, animal fats, fish oils or mixtures thereof. The vegetable oils or fats, possibly deriving from plants selected by genetic manipulation, can be selected from sunflower, rape, canola, palm, soya, hemp, olive, linseed, mustard, peanut, castor, coconut oils, fatty oils contained in the pulp of pine trees (tall oil), oils extracted from seaweeds, recycled oils or fats of the food industry and mixtures thereof. The animal oils or fats can be selected from lard, tallow, milk fats, recycled oils or fats of the food industry and mixtures thereof.

The above mixtures can also contain free fatty acids, typically in a concentration of up to 30% by weight with respect to the weight of the mixture containing glycerides.

In the hydro-HDO/ISO process, the hydrolysis step is carried out by reacting the mixtures of a biological origin containing glycerides with water, without a catalyst, at a temperature preferably within the range of 150-400°C, more preferably 200-300°C, and at a pressure preferably within the range of 1-20 MPa, more preferably 1-7 MPa, forming a mixture of fatty acids and glycerine. The mixture is biphasic and is composed of a denser aqueous phase containing glycerine and a less dense organic phase containing fatty acids. The aqueous phase also comprises most of the impurities present in the starting charge, in particular metals, chlorine, sulfur (substantially in the form of SO₄²⁻ ions) and phosphorous (substantially in the form of PO₄³⁻ ions). The two phases are separated, the glycerine is recovered from the aqueous phase and the acids are fed to the HDO step: said acids have a significantly reduced content of chlorides with respect to the starting glycerides and consequently corrosion phenomena associated with the presence of chlorides (pitting) are greatly reduced or completely eliminated. Furthermore, as the splitting phase involves a considerable reduction in the content of metals and phosphorous in the fatty acids, the life of the hydrotreatment catalyst is consequently increased.

The hydrodeoxygenation step HDO is carried out on the mixture of fatty acids obtained from the hydrolysis in the presence of hydrogen and a hydrotreatment catalyst. In this step, there is the saturation of the unsaturated portions of the aliphatic chains of fatty acids and the removal of the oxygen atoms by means of decarboxylation and decarbonylation.

Hydrotreatment catalysts that can be used are all those known in the state of the art. Said catalysts generally comprise one or more metals supported on a solid substrate with a high surface area (> 100 m²/g). Said one or more metals are preferably selected from Ni and Co.

The substrate can be amorphous or crystalline. Suitable substrates are: γ-alumina, silica, activated carbon, oxide of one or more elements belonging to groups III B and/or IVB, preferably titania, zirconia or ceria. The above substrates can be used alone or combined with each other. The substrate preferably does not substantially have strong acid sites, typically Brønsted acid sites. Said strong acid sites are preferably in a quantity lower than 2.0 micromoles/g.

The quantitative determination of the above acid sites can be effected as described in literature, for example in the article of D.G. Poduval, J. A. Rob van Vee, M. S. Rigutto, E. J. M. Hensen, Brønsted acid sites of zeolitic strength in amorphous silica-alumina, Chem. Commun., 2010, 46, 3466-68.

The acid sites in question, which are held to be Brønsted acid sites, are capable of interacting with deuterated benzene vapours at 303 K, creating one or more characteristic absorption bands within the IR spectrum of the substrate. These characteristics bands are generally observed within the range of 2675±10 cm⁻¹. In the case of amorphous silico-aluminas, this characteristic absorption band has a maximum around 2683 cm⁻¹. In amorphous silico-aluminas, this band is considered as being indicative of the presence of Brønsted acid sites with a strength comparable to the Brønsted sites of zeolites.

In accordance with the method described in the above-mentioned article of D.G. Poduval et al., the quantitative determination is based on the exchange of acid hydrogen atoms of the carrier with the deuterium atoms (H/D exchange) of molecules of deuterated benzene (C6D6) and the subsequent IR spectroscopic analysis of absorption bands within the range of 2600-2700 cm⁻¹.

The above determination comprises at least the following operative phases. First of all, a sample of catalyst is subjected to thermal treatment at 550°C and degassed under vacuum (residual pressure lower than or equal to 2x10⁻⁶ mbar). The sample of catalyst is then brought to a temperature of 303 K and exposed, at this temperature, to deuterated benzene vapours (10 mbar) for 30 minutes. Due to the exposure, the deuterium atoms of benzene exchange the hydrogen atoms of the acid sites involved, thus creating absorption bands in the spectral area of 2600-2700 cm⁻¹. At the end of the exposure, at least one IR spectrum of the catalyst is acquired. The density value of the active acid sites is obtained from the deconvolution of the characteristic absorption bands created in this spectral area, using the Lambert-Beer law, taking into account the density (mg/cm²) of the sample.

The catalyst preferably comprises one or more metals selected from Co and Ni. In addition to these metals, the catalyst can also comprise one or more metals of group VIB of the periodic table, preferably Mo and/or W.

In a particularly preferred embodiment, the catalyst comprises at least one pair of metals selected from Ni-Mo, Ni-W, Co-Mo, Co-W and mixtures thereof, more preferably Ni-Mo and/or Co-Mo.

The metals Co and/or Ni are preferably present in the catalyst in an overall quantity ranging from 3 to 8% by weight with respect to the overall weight of the catalyst; when one or more metals of group VI are present, their overall quantity ranges from 10 to 30% by weight with respect to the overall weight of the catalyst (the weight percentage of the metal refers to the content of metal expressed as metallic element).

The above catalysts can also comprise phosphorous.

The catalysts are typically prepared by impregnation of the substrate with a solution containing a precursor of the metals involved. Consecutive impregnations can be effected in order to reach the desired charging level of the metal. The impregnation is then followed by a thermal treatment in an oxidizing atmosphere to decompose the precursor and obtain the metals dispersed on the surface of the substrate. The catalyst is then subjected to suitable activation treatment by means of sulfidation. The sulfidation treatment is effected according to the methods of the known art.

Processes are also known for the production of the above supported metallic catalysts by precipitation of the metallic precursor from a saline solution of the metal itself on a carrier, or by co-precipitation of the various catalyst components, i.e. the metal and carrier.

Catalysts that can be used in the hydrotreatment step of the present invention are described, for example, in "Hydrocracking science and technology" J. Scherzer and A. J. Gruia, chapters 3 and 4, 1996.

In order to keep the catalyst in sulfided form during the reaction, the sulfiding agent (for example dimethyldisulfide) can be added to the mixture of fatty acids. The total sulfur content in the mixture of fatty acids can range, for example, from 0.02-0.5% by weight (140-3400 ppm of sulfur). Alternatively, a "*straight run*" gasoil with a high sulfur content (S > 1% by weight), can be co-fed in a ratio gasoil/fatty acid mixture which is such as to obtain the above S content in the feedstock.

The hydrodeoxygenation step HDO is normally carried out at a pressure ranging from 1 to 20 MPa, preferably from 2 to 10 MPa. The temperature preferably ranges from 240 to 450°C, even more preferably from 250 to 350°C.

It is preferable to operate at a space velocity of the liquid (LHSV) ranging from 0.5 to 2 hours⁻¹, even more preferably from 0.5 to 1 hours⁻¹. The molar ratio H₂/mixture of fatty acids preferably ranges from 5 to 30.

Hydrodeoxygenation reaction carried out on acids develops a lower reaction heat, this effect being mainly due to the fact that the glycerine part of the structure of fatty acid esters is not present, which in the case of the conversion of triglycerides, is transformed into propane, as occurs, in fact, in the known HDO processes in which mixtures containing triglycerides are fed. Considering the smaller amount of heat to be dissipated, the process can be carried out without the use of any recycling of the product, or more preferably, recycling a limited quantity of product, with a consequent significant increase in the productivity of the process.

An adequate temperature control is therefore preferably obtained by recycling at least a portion of the product, wherein said portion is in a quantity not higher than 30% by weight with respect to the weight of the total feedstock being charged into the hydrodeoxygenation reactor, wherein said total feedstock is composed of the recycled product and fresh feedstock consisting of the mixture of fatty acids.

Preferably, said portion of product resulting from the hydrodeoxygenation step may be recycled in a weight ratio within the range of 0.05-0.43 with respect to the weight of the fresh feedstock consisting of the mixture of fatty acids.

The product leaving the hydrodeoxygenation reactor is an effluent which comprises a liquid portion and a gaseous portion. The liquid portion substantially comprises a mixture of linear paraffins typically containing from 12 to 22 carbon atoms.

The effluent of the reactor is separated, for example, in a high-pressure separator, into:
- a gaseous stream containing H₂, H₂S, CO₂ and possibly small quantities of CO and NH₃
- water
- a liquid fraction containing a mixture of paraffins.

Said separator generally operates at a pressure ranging from 0.7 MPa to 14 MPa and at a temperature ranging from 40°C to 350 °C.

Hydrogen is separated from the gaseous stream, which can be recycled to the hydrodeoxygenation step.

The hydrogen can be recovered according to conventional industrial abatement methods of H₂S such as, for example, washing with amines. CO and CO₂ can be separated by means of selective absorption.

The liquid fraction can then be sent to a low-pressure separator which allows the fuel gas (essentially methane and ethane) to be separated together with small quantities of water still present, from the mixture of paraffins, which is sent to a separation column whereby the naphtha fraction can be obtained at the head of the column, together with small quantities of LPG, and the remaining mixture of paraffins at the bottom of the column.

According to an alternative scheme, the low-pressure separator can be operated so as to obtain a further separation of water and separation from the hydrocarbon mixture of both Fuel Gas and LPG. The remaining hydrocarbon mixture, substantially containing linear paraffins, is sent directly to the HDO step. This simplified solution with respect to the separation area of the flow leaving the HDO reactor is made possible by the fact that in the hydrodeoxygenation of fatty acids, only very limited quantities of propane are formed.

The linear paraffins thus obtained are subjected to the catalytic hydroisomerization step (3) so as to convert at least a part of said linear paraffins to branched paraffins. This step can be effected by putting the hydrocarbon fraction comprising linear paraffins in contact with a hydroisomerization catalyst in the presence of hydrogen.

The hydroisomerization can be carried out in accordance with techniques known to skilled persons in the field, using hydroisomerization catalysts known in the art.

Hydroisomerization catalysts that can be used are, for example, catalysts comprising one or more metals of group VIII supported on at least one solid substrate.

The metals of group VIII are preferably selected from Pt, Pd, Ir and mixtures thereof. The metals are not subjected to pre-sulfidation treatment but to an activation pretreatment effected in a stream of hydrogen, at a temperature ranging from 250 to 350°C.

The metals of group VIII are preferably present in an overall quantity ranging from 0.1% to 5% by weight with respect to the weight of the catalyst. The weight percentage of the metal(s) refers to the content of metal expressed as a metallic element.

The catalysts are typically prepared by impregnation of the substrate with a solution containing a precursor of the metals of interest. The impregnation is then followed by a thermal treatment in an oxidizing atmosphere to decompose the precursor and obtain the metals dispersed on the surface of the substrate, followed by the activation treatment described above.

The substrate can be selected, for example, from zeolites in acid form, silico-alumina, SAPO, MSA or mixtures thereof. Zeolite in acid form refers to a zeolite containing Si and A1 in the crystalline lattice and in which the cationic sites are prevalently or completely occupied by H⁺ ions.

Preferably, the catalyst comprises at least one zeolite in acid form as substrate, said zeolite preferably being selected from: zeolite Y, zeolite Beta, ZSM-22, ZSM-23, ZSM-12 and ZSM-5.

Further preferred catalysts are catalysts comprising a mixed substrate, such as, for example, Me/ZSM-22/Al₂O₃ and Me/ZSM-23/Al₂O₃, wherein Me is a metal of group VIII (e.g. Pt): the alumina in these catalysts does not act as a carrier but as a binder.

The substrate can be amorphous or crystalline. The substrate preferably has acid sites capable of promoting the isomerisation reaction of linear paraffins to branched paraffins.

The substrate generally contains a quantity of acid sites equal to or higher than 2.0 micromoles/g. The acid sites in question are capable of interacting with deuterated benzene vapours at 303 K, creating one or more characteristic absorption bands in the IR spectrum of the substrate. These characteristics bands are generally observed within the range of 2675±10 cm⁻¹. The quantity of acid sites can be measured as described in literature, for example in the above-mentioned article of D.G. Poduval, J. A. Rob van Vee, M. S. Rigutto, E. J. M. Hensen, Brønsted acid sites of zeolitic strength in amorphous silica-alumina, Chem. Commun., 2010, 46, 3466-68.

According to a particularly preferred aspect of the present invention, in accordance with what is described in WO 2008/058664 and in WO2008/113492, a catalyst can be used, consisting of a catalytic composition comprising:
(a) a carrier of an acid nature comprising an amorphous micro-mesoporous silico-alumina, having a molar ratio SiO₂/Al₂O₃ ranging from 30 to 500, a surface area greater than 500 m²/g, a pore volume ranging from 0.3 to 1.3 ml/g, an average pore diameter lower than 40 Å,
(b) a metallic component comprising one or more metals of group VIII.

Amorphous micro-mesoporous silico-aluminas that can be used as carrier (a) of the catalytic compositions of the hydroisomerization step of the present invention are described for example in US 5049536, EP 659478, EP 812804, and are called MSA. MSAs have a substantially amorphous crystallographic structure, their powder XRD spectrum does not show any significant peak. US 5049536, EP 659478, EP 812804 describe various methods for preparing silico-aluminas suitable as carrier (a).

As far as the metals are concerned, in the above catalytic compositions, the metal or metals of group VIII are preferably selected from Pt, Pd, Ir and mixtures thereof.

Catalytic compositions that can be used in the hydroisomerization step are described for example in WO2005/103207.

The hydroisomerization catalyst can be formulated and formed into extruded products having various forms (e.g. cylindrical, trilobal, etc.), as described, for example, in EP 1101813.

The hydroisomerization can be carried out, for example, at a temperature ranging from 250°C to 450°C, preferably from 280°C to 380°C, and at a pressure ranging from 2.5 MPa to 10.0 MPa, preferably from 3.0 MPa to 5.0 MPa. It is preferable to operate at a space velocity LHSV ranging from 0.5 to 2 hours⁻¹. The volumetric ratio H₂/paraffin mixture preferably ranges from 200 to 1,000 Nl (H₂)/l (paraffins).

The conditions to which occurs the hydroisomerization reaction can be suitably selected to obtain an end-product having the desired characteristics. By varying the reaction conditions, for example, paraffin mixtures having improved cold properties can be obtained, consequently more similar to those of diesel fuel or jet fuel with which the hydroisomerization product can be subsequently joined as bio-component.

By suitably varying the reaction conditions of the second step, in addition to vary the isomerisation degree of the paraffins, the distribution of the products can also be changed, maximizing the yield either in the gasoil cut or jet fuel cut.

The mixture obtained in the hydroisomerization step can be subjected to distillation to obtain said jet fuel and gasoil hydrocarbon fractions to be used as fuel or as bio-component in fuels deriving from petroleum. A naphtha fraction (C5-C9, boiling range 80°C - 180°C) that can be used as gasoline component, can also be recovered from the distillation.

A first object of the present invention therefore relates to a method according to claim 1 for revamping a refinery into a biorefinery, wherein said biorefinery is suitable for effecting the hydro-HDO/ISO process described above. According to what is specified above, an object of the present invention therefore relates to a method for revamping a refinery, comprising a system containing two hydrodesulfurization units, U1 and U2, into a biorefinery comprising a production unit of hydrocarbon fractions from mixtures of a biological origin containing fatty acid esters, by hydrolysis of the same to glycerine and to the corresponding fatty acids, which are subjected to hydrodeoxygenation and subsequent isomerization, wherein each of the hydrodesulfurization units U1 and U2 comprises:
- a hydrodesulfurization reactor, (A1) for the unit U1, and (A2) for the unit U2, wherein said reactor contains a hydrodesulfurization catalyst,
- one or more heat exchangers between the feedstock and effluent of the reactor,
- a heating system of the feedstock upstream of the reactor,
- a treatment unit of acid gases downstream of the reactor, containing an absorber (B) for H₂S, said unit called T1 in the unit U1 and T2 in the unit U2
and wherein said method comprises:
- installing a unit ID, comprising a hydrolysis reactor R_{id}, upstream of the unit U1,
- installing a connection line LD between the unit ID and the unit U1,
- installing a line L between the units U1 and U2, which connect them in series,
- possibly installing a product recycling line for the unit U1,
- possibly installing a product recycling line for the unit U2,
- substituting the hydrodesulfurization catalyst, in the reactor A1, with a hydrodeoxygenation catalyst,
- substituting, the hydrodesulfurization catalyst, in the reactor A2, with an isomerization catalyst,
- installing a by-pass line X of the treatment unit of acid gases T2 of the unit U2,
- substituting the absorber (B), in the unit for the treatment of acid gases T1, with a specific absorber for CO₂ and H₂S.

The term "refinery" normally refers to a complex of industrial plants in which the refining of oil, mineral oils or raw products of a petroleum origin, is effected. The refining is mainly oriented towards the production of fuels. Said refinery is normally indicated as conventional refinery.

The term "biorefinery" refers to a complex of industrial plants in which products and raw materials of a biological origin, such as, for example, vegetable oils, animal fats, exhausted cooking oils, are treated, to obtain fuels. The fuels thus obtained are generally indicated as biofuels.

The hydrocarbon fractions that can be obtained from the biorefinery resulting from applying the method according to the present invention, are fuels or fuel components, in particular diesel, comprising kerosene and gasoil. Smaller quantities of fuel gas and naphtha can also be obtained.

The unit ID upstream of the unit U1 comprises a hydrolysis reactor R_{ID}: said reactor is preferably made of stainless steel, even more preferably AISI 316 steel, possibly with a content of molybdenum of 2.5%. Said reactor can also be a reactor already existing in the refinery, for example a hydrocracking reactor. Said hydrocracking reactor is suitably modified in the internal part, eliminating the non-usable parts, and appropriate expedients must also be adopted for preventing corrosion due to the same fatty acids which are formed by the hydrolysis, such as, for example, to achieve internal plating with a suitable alloy, for example AISI 316.

The reactor R_{ID} is preferably in the form of a column, having a height ranging from 3 to 50 m, with an inlet in the upper part for the feeding of water, by means of a line Hq, and an inlet in the lower part for feeding the mixture of a biological origin containing glycerides, effected through a line Hb. The water is introduced in the form of oversaturated vapour at the operating pressure of the reactor. The water condenses inside the reactor, due to its higher density, it descends towards the bottom of the column and, on coming into contact with the mixture containing glycerides, it splits them into fatty acids and glycerine. The fatty acids, which are lighter, rise towards the top of the column where they are extracted from the head of the reactor by means of a line LD and fed to the hydrodeoxygenation reactor A1.

A dehydration section of the fatty acids composed of a flash B can be present on the line LD.

The water in which the glycerine is dissolved and the impurities contained in the original mixture of glycerides, in particular the alkaline and alkaline-earth metals and chlorinated derivatives and phosphorous, is collected from the bottom of the reactor and sent by means of a line LG to a separation section S_{ID}.

Said separation section is composed of a flash, to remove most of the water, obtaining a concentration of glycerine of around 85% for example, and a distillation column for anhydrifying the glycerine, obtaining a product with a water content of less than 1%. One or more columns filled with activated carbon can be possibly present in order to decolour the glycerine, when the objective of the production is an application in the pharmaceutical field. A treatment area with exchange resins can be inserted before the flash in order to remove the salts.

The heating system of the feedstock, whether it be the feedstock of fatty acids sent to the hydrodeoxygenation reactor A1 or the feedstock of paraffins sent to the reactor A2, is situated upstream of the reactor and is hereinafter called F1 for the unit U1 and F2 for the unit U2.

The recycling lines of the product possibly installed in the unit U1 and in the unit U2 are hereinafter called R1 for the unit U1 and R2 for the unit U2.

A by-pass line of an apparatus refers to a line that passes around said apparatus and consequently said apparatus is no longer used. In particular, the by-pass line X passes around the unit T2 which is therefore no longer used.

The two hydrodesulfuration units to which the method of the present invention is applied can be hydrodesulfuration units normally used in parallel in common refinery schemes.

The heating system of the feedstock and the heat exchanger between feedstock and effluent are different from each other.

The production of hydrocarbon fractions from mixtures of a biological origin containing fatty acid esters by means of their hydrolysis, hydrodeoxygenation and isomerization, corresponds to the "hydro-HDO/ISO process" previously described in detail. The production unit of hydrocarbon fractions from mixtures of a biological origin containing fatty acid esters by means of their hydrolysis, hydrodeoxygenation and isomerization, is hereinafter called "hydro-HDO/ISO unit". The term "unit" refers to the combination of apparatuses for the embodiment of a process or treatment.

Desulfuration units that can be used for the method of the present invention are all units known to skilled person in the field: said desulfuration units comprise the hydrodesulfuration reactor, containing the hydrodesulfuration catalyst, one or more heat exchangers between feedstock and effluent, a heating system of the stream at the inlet of the reactor, an acid gas treatment unit downstream of the reactor, containing a specific absorbent for H₂S.

As is known to skilled person in the field, the hydrodesulfuration reactor is normally made of low-alloy carbon steel (for example 1 1/4 Cr-1/2 Mo, 2 1/4 Cr- 1 Mo) with respect to the reactor jacket, with a stainless steel internal lining of the type 321 SS, 347 SS. The reactor interiors are normally made of stainless steel of the type 321 SS, according to what is suggested by the standard API 941 - 2004. The hydrodesulfuration reactors that can be used and their configurations are well-known to skilled person in the field and are described for example in "Handbook of Petroleum Refining Processes", Robert A. Meyers Editor, Mc Graw-Hill, III edition, 2004.

The desulfuration catalysts are well-known to skilled persons in the field, and can be selected from hydrogenation catalysts containing a carrier, usually alumina, and one or more metals selected from metals of group VIII and group VIB, for example CoMo/Alumina; CoMo-NiMo/Alumina, and are described, for example in "Petroleum Refining: Technology and Economics", of James H. Gary,Glenn E. Handwerk and "Hydrotreating and hydrocracking fundamentals, P. R. Robinson, G.E Dolbear.

The heat exchanger of the feedstock-effluent exchange train used in a desulfuration unit are normally made of low-alloy carbon steel (1 Cr- 1/2 Mo) with a possible internal lining made of stainless steel (347 SS), or totally of stainless steel (347SS, 321 SS), for high-temperature feedstock-effluent exchangers, whereas it is made of simple carbon steel or work-hardened steel (CS or KCS) for exchangers operating at lower temperatures. These exchangers allow heat exchange between feedstock to the reactor and effluent.

In the hydro-HDO/ISO unit obtained by the process of the present invention, said exchangers are no longer subjected to the risk of corrosion due to the presence of chlorides, as occurs in the known processes in which the glycerides undergo hydrodeoxygenation and in which the effluent from the HDO reactor contains chlorides which, at the moment of cooling, cause corrosion phenomena due to the condensation of the hydrochloric acid (pitting). The effluent from the HDO reactor in the new configuration of the present invention, in fact, contains an extremely reduced quantity of chlorides, as the chlorine content in the mixtures of triglycerides is separated together with the glycerine after the hydrolysis step.

Furthermore, according to another advantageous aspect of the new operative structure of the present invention, in the new configuration, the recycling ratio in the HDO feeding can be significantly reduced, the HDO reaction effected on fatty acids and consequently in the absence of glycerine, in fact, develops a lower quantity of heat with respect to the same reaction carried out on mixtures of glycerides.

Heating systems, situated upstream of the hydrodesulfuration reactor and operating on the feedstock being fed to the reactor can be selected from direct fired ovens and heat exchangers. An oven comprising a radiating section and possible a convective section is preferably used.

The description of heating systems, and in particular ovens and their configurations and production suitable for hydrodesulfuration units can be found, for example, in "Handbook of Petroleum Processing", edited by David S. J. Jones and Peter P. Pujadó.

Acid gas treatment units suitable for being used in hydrodesulfuration units, their configurations and specific absorbents for the absorption of H₂S are well-known to skilled person in the field and are described, for example, in Selecting Amines for Sweetening Units, Polasek, J. (Bryan Research & Engineering) and Bullin, J.A. (Texas A&M University), Gas Processors Association Regional Meeting, Sept. 1994.

An acid gas treatment unit refers to a system in which one or more gases of an acid nature are separated from a gaseous mixture containing them by absorption with an absorbent and recovered by regeneration of the absorbent.

Absorbents that can be used are, for example, solvents, preferably of the alkanol-amine type, for example MDEA (methyl-diethanol-amine) or DEA (diethanolamine).

One or more sulfur recovery units which can be used in the method of the present invention, are also normally present in refineries, as will be described in more detail hereunder: said sulfur recovery units are well-known to skilled person in the field and comprise a primary sulfur recovery section, of the Claus type, and possibly a tail-gas treatment section suitable for increasing the conversion to sulfur. In particular, a sulfur recovery unit of the Claus type is composed of a first thermal reaction step, consisting of the furnace in which the acid gas is burnt at temperatures higher than 1500°C and where the Claus reaction takes place (3H2S+(3/2)O2 => 3S+3H2O), which converts about 70% by weight of the sulfur at the inlet of the unit, followed by a catalytic section, consisting of two or more catalytic reactors, containing an alumina bed, where part of the non-reacted H₂S is converted to elemental sulfur, alternated by an intermediate cooling suitable for condensing the sulfur produced. A Claus unit thus formed reaches a recovery of about 96-98% by weight of the sulfur at the inlet.

Said Claus unit and the catalysts used therein are well-known to skilled persons in the field and are described, for example, in Fundamental and Practical Aspects of the Claus Sulfur Recovery Process P.D. Clark, N.I. Dowling and M. Huang, Alberta Sulfur Research Ltd., Calgary, Alberta, Canada.

In the method of the present invention, the substitution of the hydrodesulfuration catalyst inside the reactors A1 and A2 with HDO and ISO catalysts, respectively, does not involve any particular difficulty and can be easily effected. Said HDO and ISO catalysts can be selected from known hydrodeoxygenation and isomerization catalysts, preferably those previously described in the detailed description of the hydro-HDO/ISO process specified above.

The units U1 and U2 also preferably contain hydrogen recycling lines, and relative compressors, which connect the acid gas treatment units which are situated downstream of the reactors, with the same reactors: said lines, and relative compressors, are re-used for the same purpose in the production unit of hydrocarbon fractions from mixtures of a biological origin obtained by the conversion method of the present invention.

A particularly preferred aspect relates to a method according to the present invention, additionally operating so as to recycle the H₂S formed by the HDO step, after recovering it from the absorbent (B) of T1. The H₂S is formed by decomposition of the sulfiding agents fed to the HDO reactor A1 for maintaining the hydrodeoxygenation catalyst in its sulfided form, i.e. active form. In the HDO step, CO₂ is also formed by decarboxylation of the fatty acid esters.

As further described hereunder, in order to separate the H₂S, the mixture of CO₂ and H₂S formed during the HDO step must be recovered from the absorbent of T1 and, after separating the H₂S from the CO₂, by means of two additional absorption/regeneration steps, carried out in a further acid gas treatment unit, called T3, the stream of H₂S resulting from the HDO section is recycled, as sulfiding agent of the catalyst of the reactor A1, preferably sending it to the compressor K1 of the hydrogen recycling line of the unit U1 by means of a new line R3 installed for this purpose.

In particular, the line R3 is connected to the suction of said compressor K1.

In accordance therefore with said preferred aspect, the method of the present invention also comprises the addition of said further acid gas treatment unit T3, downstream of the unit T1 and connected to said unit T1, in which the two above-mentioned additional absorption/regeneration steps can be effected, and the installation of said new recycling line of H₂S between the unit T3 and the HDO section, preferably in the suction phase of the compressor K1 which is situated on the hydrogen recycling line of the unit U1. The unit T3 contains two absorbing areas each containing a specific absorbent for H₂S.

By applying said further modifications to the system comprising the units U1 and U2, the objective of recycling the H₂S to the HDO reactor A1 in order to maintain the catalyst in its sulfided form, is reached, guaranteeing its activity without the necessity of feeding other sulfiding agents, of the type DMDS, or in any case feeding said sulfiding agents in a more limited quantity.

A further advantage of said recycling the H₂S lies in the substantial reduction in emissions of acid gas, which is reduced to CO₂ alone, and which consequently does not have to be treated in the Claus plant, but can be sent directly to the final thermo-combustor of the sulfur recovery unit.

In accordance with what is specified above, a preferred aspect of the present invention therefore relates to a method for revamping a refinery comprising a system containing two hydrodesulfuration units, U1 and U2, into a biorefinery containing a hydro-HDO/ISO unit comprising a hydrolysis section ID, hydrodeoxygenation section HDO and a hydroisomerization section ISO,
wherein each of the hydrodesulfuration units, U1 and U2 comprises:
- a hydrodesulfurization reactor, (A1) for the unit U1 and (A2) for the unit U2, wherein said reactor contains a hydrodesulfurization catalyst,
- one or more heat exchangers between the feedstock and effluent of the reactor,
- a heating system of the feedstock upstream of the reactor,
- a treatment unit of acid gases downstream of the reactor, containing an absorber (B) for H₂S, said unit called T1 in the unit U1 and T2 in the unit U2,
and wherein said method comprises:
- installing a unit ID, comprising a hydrolysis reactor R_{id}, upstream of the unit U1,
- installing a connecting line LD between the unit ID and the unit U1;
- installing a line L between the unit U1 and the unit U2 which connects them in series;
- possibly installing a product recycling line for the unit U1 and possibly installing a product recycling line for the unit U2;
- substituting the hydrodesulfurization catalyst, in the reactor A1, with a hydrodeoxygenation catalyst;
- substituting the hydrodesulfurization catalyst, in the reactor A2, with an isomerization catalyst;
- installing a by-pass line X of the treatment unit of acid gases T2 of the unit U2;
- substituting the absorber (B), in the unit for the treatment of acid gases T1, with a specific absorber for CO₂ and H₂S;
- installing a treatment unit of acid gases T3 downstream of the treatment unit of acid gases T1 in order to separate the H₂S;
- recycling the H₂S to the reactor A1.

The flow of H₂S at the outlet of T3 can reach the reactor A1 by means of a new line that is connected in any point of the unit U1 suitable for the purpose.

According to what is specified above, a particularly preferred aspect of the present invention relates to a method for revamping a refinery comprising a system containing two hydrodesulfuration units, U1 and U2, into a biorefinery containing a hydro-HDO/ISO unit, wherein each of the hydrodesulfuration units U1 and U2 comprises:
- a hydrodesulfurization reactor, (A1) for the unit U1 and (A2) for the unit U2, wherein said reactor contains a hydrodesulfurization catalyst,
- one or more heat exchangers between the feedstock and effluent of the reactor,
- a heating system of the feedstock upstream of the reactor,
- a treatment unit of acid gases downstream of the reactor, containing an absorber (B) for H₂S, said unit called T1 in the unit U1 and T2 in the unit U2,
- a hydrogen recycling line and a compressor on said line, said compressor called K1 for the unit U1 and K2 for the unit U2,
and wherein said method comprises:
- installing a unit ID, comprising a hydrolysis reactor R_{id}, upstream of the unit U1,
- installing a connecting line LD between the unit ID and the unit U1;
- installing a line L between the unit U1 and the unit U2 which connects them in series;
- possibly installing a product recycling line for the unit U1 and possibly installing a recycling line for the unit U2;
- substituting the hydrodesulfurization catalyst, in the reactor A1, with a hydrodeoxygenation catalyst;
- substituting the hydrodesulfurization catalyst, in the reactor A2, with an isomerization catalyst;
- installing a by-pass line X of the treatment unit of acid gases T2 of the unit U2;
- substituting the absorber (B), in the unit for the treatment of acid gases T1, with a specific absorber for CO₂ and H₂S;
- installing a treatment unit of acid gases T3 downstream of the treatment unit of acid gases T1;
- installing a line R3 for recycling the H₂S from the unit T3 to the compressor K1 of the hydrogen recycling line of unit U1, preferably to the suction of the compressor K1.

As previously specified, one or more sulfur recovery units are normally present in refineries. Said sulfur recovery units are well-known to skilled person in the field and have already been described. In particular, sulfur recovery unit of the Claus type is preferably used in refineries: this type of unit has been previously described and, as already specified, substantially comprises a thermal reaction section and a catalytic section.

A further particularly preferred aspect relates to a method according to the present invention in which the unit U1 is connected to a sulfur recovery unit, preferably a Claus unit, by the installation of a by-pass line of the thermal section of said sulfur recovery unit, and the substitution of the catalyst of the first reactor of the catalytic section with a cold selective redox catalyst, capable of revamping H₂S into liquid sulfur. Catalysts suitable for the purpose can be selected from oxides of metals of group VIB combined with transition metals of group VIII and are described for example in US 6372193 and in the documents cited therein.

A further aspect of the present invention is to install a surge drum (S) upstream of each of the reactors A1 and A2.

The hydrodesulfuration units can contain, in addition to what has already been described above:
- a line for feeding make-up hydrogen possibly after mixing with recycled hydrogen, to each of the reactors (A1) and (A2), wherein said line can derive for example from the refinery hydrogen network or directly from a reforming unit;
- a fractionation unit of the products obtained, a gas separation/washing unit, downstream of each of the reactors (A1) and (A2).
wherein all of this part of equipment remains unvaried, does not undergo changes or modifications due to the transformation method of the present invention and is re-used as such, thus also being included in the production unit of hydrocarbon fractions from mixtures of a biological origin containing fatty acid esters by means of their hydrolysis, hydrodeoxygenation and isomerization, as said unit is composed after application of the transformation method of the present invention.

As previously specified, connection lines can be present between a reforming unit and each of the reactors (A1) and (A2), as the reforming unit is normally present in a refinery together with the desulfuration unit. Said lines, called (LH1) and (LH2), allow the hydrogen formed in the reforming unit as by-product, to be used, whether it be a catalytic reforming unit or a steam reforming unit: said lines can therefore be part, as such, of the production unit of hydrocarbons from mixtures of a biological origin and be adopted without undergoing any modification.

The revamping of a refinery containing hydrodesulfuration units through the operations described above, allows a biorefinery to be obtained, with minimum interventions, times and costs, containing a transformation unit of mixtures containing fatty acid esters into hydrocarbon mixtures that can be used as diesel and diesel components by means of a process comprising a hydrolysis step, a hydrodeoxygenation step and an isomerization step.
In particular, for effecting the hydro-HDO/ISO process previously described, the hydrodeoxygenation step (HDO) is carried out in one of the hydrodesulfuration reactors, the reactor (A1), in which the structure of the fatty acids obtained from the hydrolysis of the triglycerides contained in the mixture of a biological origin in the reactor R_{ID}, is transformed into paraffinic compounds with the contemporaneous production of CO₂, fuel gas and water and possibly CO.

The HDO reaction effected on the fatty acids is less exothermic than the same reaction on the corresponding glycerides, and consequently the necessity of diluting the fresh feedstock with the reaction products in order to reduce the formation of heat, is drastically reduced, up to the point of possibly eliminating the necessity of recycling. It is preferable, however, for at least part of the product to be recycled and said recycling can be effected by the installation of a new line (R1) introduced downstream of the reactor: the new recycling line of the reaction product (R1) is preferably such as to allow a flow-rate equal at the most to a half of that of the fresh feedstock of fatty acids being fed to the reactor through the line LD.

The exothermicity can also be controlled with hydrogen quenching, which can normally already be present in the hydrodesulfuration units, alternating with the various catalytic beds.

A surge drum (S) can be additionally inserted upstream of the reactor used for the hydrodeoxygenation step and upstream of the reactor used for the isomerization step (ISO): said drum has the purpose of equalizing the feedstock, consisting of fresh feedstock plus recycled reacted product.

Using the method of the present invention is no longer a limiting factor in the metallurgy of the components: the chlorine contained in the feedstocks of a biological origin containing triglycerides is removed during the separation of the glycerine in the separator S_{ID} of the unit ID, previously described. All the areas composed of low-allow or carbon steel in which the condensation of water vapour can take place with traces of hydrochloric acid, are chloride-sensitive components, and in particular the condensers are therefore sensitive components: also taking this into account, the method of the present invention represents an improvement with respect to the method described in WO 2014/033762.

The hydrocarbon product resulting from the HDO step is fed through the new connection line (L) to the hydroisomerization section where the isomerization step takes place, in the reactor A2, with possible recycling of the isomerization product to the same reactor A2, by means of a new line (R2), in order to ensure the wettability of the catalyst, thus also allowing the use of a low quantity of fresh feedstock.

As previously specified, each of said hydrodesulfuration units to which the revamping method of the present invention is applied, contains an acid gas treatment unit, hereinafter also called acid gas washing unit, normally operating downstream of a high-pressure separator, situated on the reactor effluent, whose function is to purify the hydrogen leaving the reactor, by separation from the H₂S formed during the hydrodesulfuration, before said hydrogen is recycled. Furthermore, the desulfuration unit normally contains a low-pressure separator from which fuel gas (FG) containing methane, ethane and H₂S, is separated, whereas the liquid fraction is sent to a stripping column, suitable for separating LPG and naphtha at the head and desulfurized gas oil at the bottom of the column. A vacuum dryer is normally inserted on the line of the desulfurized product for removing possible traces of water present in the product, before sending it for storage. According to the method of the present invention, the new connection line (L) installed between the two units U1 and U2, is preferably inserted downstream of said drying unit, if present in the unit U1, or it is inserted downstream of the stripping column of the unit U1.

According to a preferred aspect of the present invention, a by-pass line of the stripping column can also be installed, which directly connects the low-pressure separator with the unit U2: in this alternative scheme, the low-pressure separator is exerted so as to obtain a further separation of water and the separation, from the hydrocarbon mixture, of both fuel gas and LPG: the hydrocarbon mixture is then sent directly to the unit U2.

This simplified configuration with respect to the separation area of the flow leaving the HDO reactor is possible due to the new structure obtained with the process of the present invention: the presence of the hydrolysis unit allows the recovery, in the form of glycerine, of the glycerine part of the structure of the fatty acid esters, consequently propane is not formed in the hydrodeoxygenation unit, simplifying the subsequent purification and separation operations between the hydrodeoxygenation unit and the hydroisomerization unit.

Due to the differing nature of the gases leaving the hydrodeoxygenation reactor, with respect to those generated by the hydrodesulfuration, for which the acid gas treatment unit was designed, hereinafter also called acid gas washing unit, according to the method of the present invention, the absorbent used in the acid gas treatment unit must be substituted: the gas leaving the reactor in which the HDO step is carried out, in fact, mainly contains H₂, H₂S and CO₂, with a ratio of about 1-5% by weight of H₂S with respect to the total H₂S and CO₂, whereas in pre-existing hydrodesulfuration case, the gas leaving the reactor mainly contained H₂ and H₂S, with a high content of H₂S, resulting from the sulfur content of the raw material being fed to the refinery.

The acid gas treatment unit therefore contains an absorbent (B) specific for H₂S, normally a selective amine for H₂S. In the configuration deriving from the method of the present invention, as the reactor upstream of said acid gas separation unit is used for the hydrodeoxygenation of mixtures containing fatty acids, the gaseous by-product from which the hydrogen is to be purified before being recycled to the HDO reactor, is mainly CO₂, mixed with smaller quantities of H₂S, due to the sulfidation in continuous of the HDO catalyst.

The varying nature, composition and flow-rate of the gases leaving the HDO reactor can be processed in the pre-existing acid gas treatment unit by simple substitution of the pre-existing absorbent suitable for the absorption of H₂S with a selective absorbent for both CO₂ and H₂S.

In accordance with the method, object of the invention, the absorbent (B) of T1 is therefore substituted with an absorbent suitable for absorbing both CO₂ and H₂S, the purified hydrogen is refed to the reactor and the gaseous mixture mainly containing CO₂ and H₂S (the latter in a quantity normally ranging from 1 to 5% with respect to the sum of CO₂ and H₂S) is recovered from the absorbent used by means of a regeneration column, said column forming part of the pre-existing acid gas treatment system.

Absorbents suitable for the absorption of CO₂ and H₂S, in the proportions indicated above, and which can be used in the method of the present invention, are well-known to expert in the field. According to a preferred aspect, amines available on the market, produced by DOW and BASF, are used, and preferably methyldiethanolamine (MDEA) with promoters or activated. Said amines are described, for example, in US 6337059. Amines suitable for being used in the present invention, produced by DOW, are, for example, those of the series UCARSOL™ AP, such as, for example, AP802, AP804, AP806, AP810 and AP 814, and preferably UCARSOL™ AP Solvent 810.

The mixture of CO₂ and H₂S is recovered from said absorbents by regeneration of the absorbent, particularly in the case of an amine solvent, in a distillation column, reboiled, operating at low pressure. Other impurities that may be present in the gases leaving the HDO reactor are removed by means of the same treatment described above.

According to another preferred aspect of the present invention, the H₂S present in the gas leaving the first reactor, A1, can be further concentrated in order to be refed to said HDO reactor A1 to keep the catalyst in sulfided form, guaranteeing its activity. According to said preferred aspect, the method of the present invention comprises the installation of a further acid gas treatment unit T3, downstream of the treatment unit T1, in which two further steps are effected, each of which comprises the absorption of a specific solvent, selective for H₂S, and relative regeneration. Said steps are suitable for separating the H₂S from the CO₂, present in the acid gas stream obtained from the acid gas treatment unit T1 of the unit U1, to obtain a stream of concentrated H₂S to be refed to the deoxygenation reactor A1 through the new line R3 previously described, which connects T3 to the HDO section, preferably to the compressor K1 of the hydrogen recycling line, and in particular to the suction of the compressor K1.

Absorbents suitable for the absorption of H₂S alone, which can be used in the method of the present invention for the unit T3, are well-known to experts in the field. According to a preferred aspect, amines available on the market, produced by DOW and BASF, are used, and preferably methyldiethanolamine (MDEA) with promoters or activated. Suitable amines, produced by DOW, are for example those of the series UCARSOL™ HS, such as, for example, HS101, HS102, HS103, HS104, HS115, and preferably UCARSOL™ HS solvent 102.

In the method of the present invention, as previously described, the use of the acid gas absorption section T2 installed on the recycled gas, is not necessary in the ISO section, and for this purpose the by-pass line X is installed: T2 can therefore possibly be re-used for one of the two additional separation steps, necessary for separating the H₂S from the CO₂ described above. The use of T2 is not necessary as the flow leaving the reactor A2 does not contain H₂S.

The CO₂ is then recovered from the head of the two absorption columns and sent to the final thermo-combustor of the sulfur recovery plant (of the Claus type) normally present in refineries, or to any refinery oven previously equipped with specific flues on some burners for the introduction of said stream.

According to another aspect of the method of the present invention, the refinery in which said method of the present invention is applied, is equipped with a sulfur recovery unit, wherein said unit has been previously described and is preferably a Claus unit, which can be used, according to the method of the present invention, for treating the CO₂/H₂S gaseous mixture leaving the acid gas treatment unit according to two possible modes, a traditional operative mode and a modified operative mode.

The traditional operative mode, known to skilled person in the field and in accordance with what has been previously described and indicated in Fundamental and Practical Aspects of the Claus Sulfur Recovery Process P.D. Clark, N.I. Dowling and M. Huang, Alberta Sulfur Research Ltd., Calgary, Alberta, Canada, is used when, in the refinery in which the hydrodesulfuration units U1 and U2 are present, there are other H₂S sources such as to consider the contribution of the HDO/ISO process negligible (for example hydrocrackers or other hydrodesulfurations of hydrocarbon fractions): when operating according to this mode, the CO₂/H₂S gaseous mixture is fed to the sulfur recovery unit, together with the H₂S deriving from the other sources, wherein said sulfur recovery unit is used as such, i.e. without undergoing any modification. According to this mode, the method of the present invention comprises installing a connection line between T1 and the sulfur recovery unit.

The modified operative mode is suitable for treating low quantities of acid gas with an extremely low H₂S content, as in the case in which there are no other significant H₂S sources in addition to the HDO/ISO process: said mode preferably uses a unit of the Claus type and is effected by the installation, from the unit T1, of a by-pass line of the hot section in the Claus unit (furnace) and by substitution of the catalyst of the first of the Claus reactors of the sulfur recovery unit with a catalyst suitable for the treatment of gaseous streams in which H₂S is present in a concentration lower than 30% mole. Said catalyst can be selected, for example, from oxides of metals of group VIB combined with transition metals of group VIII and are described, for example, in US 6372193 and in the documents cited therein.

In this case, the unit for the treatment of tail gas possibly present, continues to operate to ensure a further abatement of SO₂ emissions.

The sulfur recovery is completed by the condensation of the liquid sulfur in the collection tanks normally forming part of a sulfur recovery unit.

The hydrogen necessary for the production unit of hydrocarbon fractions from mixtures of a biological origin, containing fatty acid esters, by means of their hydrolysis, hydrodeoxygenation and isomerization, comprises recycled hydrogen and a flow of make-up hydrogen, preferably mixed with recycled hydrogen and fed to the reactors A1 and A2 used for the HDO step and ISO step: said make-up hydrogen can be supplied, as previously indicated, by reforming units normally already present in refineries. In particular, heavy naphtha (BP 80-160°C) can be fed to a catalytic reforming unit.

The reforming reaction conditions differ depending on the type of unit installed: for semi-generative reforming units, the operating pressure is 16-28 barg with a Platinum-Rhenium catalyst and a H/C ratio of <4; for continuous new-generation reforming units, the operating pressure is 2.5-5 barg with a Platinum-Tin catalyst and a H/C <3; the desired product is the reformate, a gasoline base with a high octane number (98-101), with the contemporaneous formation of H₂.

Natural gas, fuel gas, LPG or virgin naphtha are fed to the steam reforming unit; the steam reforming reaction takes place with a nickel catalyst on alumina at high temperatures 750-900°C and an operating pressure of 20-40 barg. The desired product is H₂.

The hydrogen deriving from reforming can then be fed to the reactors (A1) and (A2) by means of pre-existing lines or specific lines for the purpose, respectively indicated as LH1, to the hydrodeoxygenation reactor A1, and LH2, the isomerization reactor A2, and possibly after purification and concentration of the hydrogen flow by means of a PSA system. This configuration allows a separate and autonomous hydrogen feed to be obtained for each reactor, thus improving the flexibility and operability of the plants. This aspect represents an improvement with respect to usual hydrodeoxygenation processes of vegetable oils, which comprise a single hydrogen circuit for the two reactors. The PSA (pressure swing adsorption) system, when present, uses for example a series of beds filled with adsorbent material, typically a zeolite. The stream of gas rich in hydrogen flows through the bed, the gaseous products are adsorbed and, as hydrogen has a lesser tendency to be adsorbed, a flow of pure hydrogen is obtained at the outlet of the PSA unit. The regeneration of the adsorbing bed must be cyclically effected by depressurization.

A purification system of the feedstock of a biological origin does not have to be added to the production unit of hydrocarbon fractions from mixtures of a biological origin, containing fatty acid esters, by means of their hydrolysis, hydrodeoxygenation and isomerization, obtained with the transformation method of the present invention by hydrodesulfuration unit; the purpose of these systems, in fact, is normally to remove the impurities that can poison the HDO catalyst, such as metals (P, Fe, Ca, Mg, K, Na) and nitrogen, but in the case of the present invention, this removal is effected during the same hydrolysis step.

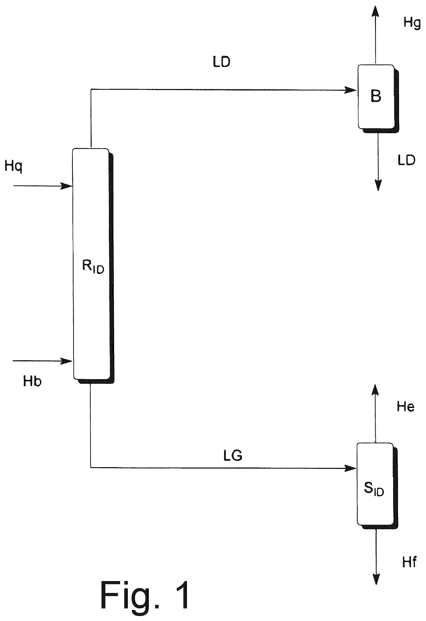

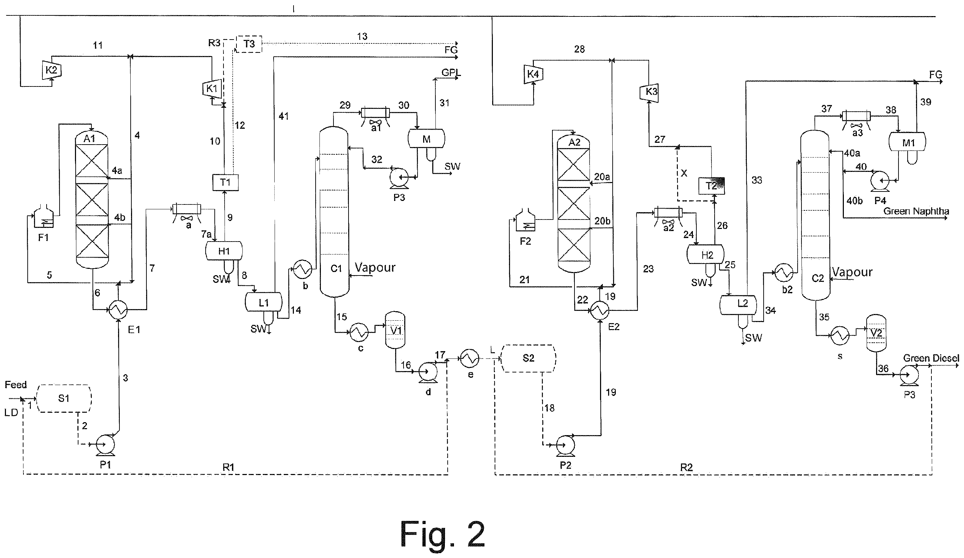

Figure 1 shows an example of a scheme relating to the unit ID and figure 2 shows an example relating to the HDO/ISO unit, wherein said units derive from the revamping method of the present invention: the parts of figure 1 correspond to a new installation, and in figure 2 the dashed parts and lines correspond to new installations, whereas the continuous parts and lines correspond to pre-existing hydrodesulfuration equipment.

In particular, in Figure 1, R_{ID} is the hydrolysis reactor, Hq the line through which the water is fed and Hb is the line through which the glycerides, which undergo hydrolysis in R_{ID} to the corresponding fatty acids and glycerine, are fed. The water, in which glycerine is dissolved together with the impurities contained in the original mixture of glycerides, reaches, through the line LG, the separation section S_{ID} comprising a flash to remove most of the water and a distillation column for anhydrifying the glycerine (not shown in the figure). The water is removed through the line He and the glycerine recovered through the line Hf.

The fatty acids are sent through the line LD to the hydrodeoxygenation reactor A1 (not shown in figure 1), the flash B is present on the line for the dehydration of said acids, from which the water is recovered through the line Hg.

In Figure 2 "Feed" is the mixture of fatty acids deriving from the hydrolysis unit ID, through the line LD. The feedstock of fatty acids deriving from the hydrolysis unit ID is fed through said line LD to the surge drum S1 after mixing with part of the reaction product, wherein said product is in a quantity not higher than 30% by weight with respect to the total feedstock fed to the reactor, said total feedstock being composed of fresh feedstock and said recycled product. The reaction product is recycled through line R1: the equalization of the feedstock composed of fresh feed and the fraction of recycled product therefore takes place in S1.

The feedstock leaving S1 reaches the feedstock-effluent exchanger E1 through line 2 in which the pump P1 is situated.

The heat exchange between the feedstock and product leaving the reactor A1 takes place in E1. The feedstock reaches the hydrogen feeding line 4 through line 3, and the mixture of hydrogen and feedstock is fed to the reactor A1 through line 5: the oven F1 that heats the mixture to the reaction temperature is situated on this line.

The hydrodeoxygenation product leaving the reactor reaches the exchanger E1 through line 6 and subsequently reaches the air exchanger through line 7 and the high-pressure separator H1 through line 7a. The separation of the water SW, the hydrocarbon fraction formed during the hydrodeoxygenation step and the gaseous mixture prevalently consisting of H₂, H₂S and CO₂, takes place in said separator H1. The hydrocarbon fraction is sent through line 8 to the low-pressure separator L1. The mixture of H₂, H₂S and CO₂ is sent through line 9 to the acid gas treatment unit T1. The CO₂ and H₂S are absorbed in said acid gas unit T1 by means of a specific absorbent and said absorbent is regenerated: a stream of hydrogen and a stream of CO₂ and H₂S are therefore obtained at the outlet of the unit T1. The stream of hydrogen reaches line 11 through line 10, which feeds hydrogen deriving from an internal source of the refinery, for example a reforming unit. The compressors K1 and K2 are present on line 10 and line 11 respectively. The hydrogen comes from line I which represents the hydrogen supply network of the refinery. The resulting hydrogen flow reaches the feed line 3 through line 4. Lines 4a and 4b branch off from line 4, which allow part of the hydrogen to be fed at different heights of the reactor also obtaining a quenching effect. The stream of CO₂ and H₂S at the outlet of the unit T1 reaches the acid gas treatment unit T3 through line 12.

The separation of CO₂ and H₂S takes place in said acid gas unit T3 through two absorption steps with specific absorbents and their respective regeneration: a stream of H₂S and a stream of CO₂ are therefore obtained at the outlet of the unit T3.

The stream of H₂S leaving T3 reaches the suction of the compressor K1, through the line R3, where the hydrogen flow of line 10 also arrives.

The stream of CO₂ leaving T3 is fed, through line 13, to the final thermo-combustor of the Claus plant or is sent to one of the refinery ovens suitably equipped with specific flues for the insertion of said stream.

A further separation of water SW takes place in the low-pressure separator L1, together with separation from the hydrocarbon mixture of Fuel Gas (FG), which is removed through line 41. The hydrocarbon mixture is then sent to the fractionation column C1 through line 14, on which the exchanger b is situated.

At the head of the fractionation column, line 29 brings a mixture of gas, containing water and small quantities of propane to the condenser a1. Said mixture is fed through line 30 to an accumulator M, where the separation is effected of the water, the small quantities of propane which are removed through line 31, and the liquid used as reflux in the fractionation column C1, through line 32 and the pump P3.

A hydrocarbon fraction substantially containing linear paraffins having a number of carbon atoms which depends on the type of feed used, is separated from the bottom of the fractionation column. Said hydrocarbon fraction reaches the vacuum dryer V1 by means of line 15 on which the exchanger c is situated. The flow of hydrocarbon product leaving V1, passes through line 16 into the pump d and then to the exchanger and through line 17, before being partly fed to the subsequent isomerization section through the line L and partly recycled into the feed through the line R1.

The hydrocarbon product of the HDO section leaving the exchanger is fed through line L to the surge drum S2. The recycling line R2 of the isomerization product is inserted on line L and the equalization of the feedstock is obtained in S2.

The feedstock leaving S2 reaches the exchanger E2 through line 18 on which the pump P2 is situated.

The heat exchange between the feedstock and product leaving the reactor A2 takes place in E2. The feedstock reaches the hydrogen feeding line 20, through line 19, and the mixture of hydrogen and feedstock is fed through line 21 to the reactor A2: the oven F2 which heats the mixture to the reaction temperature is situated on said line.

According to an alternative scheme, not shown in the figure, the low-pressure separator L1 can be operated so as to obtain the further separation of water SW and the separation, from the hydrocarbon mixture, of both Fuel Gas and small quantities of LPG, which are removed through line 41. The remaining hydrocarbon mixture, substantially containing linear paraffins, is sent directly to the vacuum dryer V1. This simplified solution relating to the separation area of the flow leaving the HDO reactor is enabled by the new structure obtained with the process of the present invention: the presence of the hydrolysis unit allows the recovery, in the form of glycerine, of the glycerine part of the structure of the fatty acid esters, consequently propane is not formed in the hydrodeoxygenation unit, or only very small quantities are formed, thus simplifying the subsequent purification and separation operations between the hydrodeoxygenation unit and the isomerization unit.

The isomerization product leaving the reactor A2 reaches the exchanger E2 through line 22 and subsequently reaches the air exchanger a2 through line 23 and the high-pressure separator H2 through line 24. The separation of the water SW, the isomerized hydrocarbon fraction formed during the isomerization step and hydrogen, takes place in said separator H2. The hydrocarbon fraction is sent through line 25 to the low-pressure separator L2. The stream of hydrogen leaves the separator H2 through line 26 and said line 26 joins the line X, whose function is to allow the by-pass of the acid gas treatment unit T2. T2 is part of the hydrodesulfuration unit which has been revamped and is not used in the new HDO/ISO unit. The line X therefore allows the hydrogen flow to not pass through T2 and joins line 27, through which the hydrogen flow reaches line 28, which feeds hydrogen deriving from an internal source of the refinery, for example a reforming unit. The compressors K3 and K4 are present on line 27 and 28 respectively. The resulting hydrogen flow reaches the feed line 19 through line 20. The existing lines 20a and 20b branch off from line 20, which allow part of the hydrogen to be fed at different heights of the isomerization reactor also obtaining a quenching effect.

A further separation takes place in the low-pressure separator L2, of the water SW from the isomerized hydrocarbon mixture and from the Fuel Gas (FG) which is removed by means of line 33. The isomerized hydrocarbon mixture is then sent to the fractionation column C2 by means of line 34, on which the exchanger b2 is situated. An isomerized hydrocarbon fraction is separated from the bottom of the fractionation column. Said hydrocarbon fraction reaches the vacuum dryer V2 through line 35 on which the exchanger s is situated. The flow of isomerized hydrocarbon product, through line 36, is fed to the pump P3: the flow leaving the pump is partly recovered and partly recycled through line R2 to the line L. The product recovered is a high-quality diesel of a biological origin (Green Diesel).

At the head of the fractionation column C2, the line 37 brings a mixture of fuel gas and naphtha to the exchanger a3. Said mixture is fed through line 38 to an accumulator M1. The Fuel Gas is separated from the naphtha in said accumulator M1. The fuel gas is removed through line 39 which joins line 25.

The naphtha is partly recycled, through line 40, on which the pump P4 is situated, to the fractionation column C2, (line 40a) and partly recovered as high-quality naphtha of a biological origin (Green Naphtha).

A method has therefore been found for transforming hydrodesulfuration units into conversion units of biological mixtures, containing fatty acid esters, into fuel bases, mainly diesel and diesel components, in addition to naphtha and fuel gas: said method comprises minimum variations in the equipment already existing, a limited number of suitably selected substitutions and new installations, wherein said new installations allow a significant increase in the productivity to be obtained, with a reduction in or elimination of corrosion phenomena associated with the presence of chlorides, and the use of smaller quantities of hydrogen.

The method of the present invention allows a new biorefinery to be obtained, which is suitable for effecting a hydro-HDO/ISO process for the production of hydrocarbon fractions, which can be used as fuels, starting from mixtures of a biological origin containing fatty acid esters, wherein said hydro-HDO/ISO process, as previously described in detail, comprises the following steps:
1) hydrolysis of the mixture of a biological origin to fatty acids and glycerine;
2) hydrodeoxygenation of the fatty acids obtained in step (1) obtaining a mixture of paraffins;
3) hydroisomerization of the paraffin fraction obtained in step (2) to give a diesel hydrocarbon fraction.

Said new biorefinery therefore comprises:
- a hydrolysis unit ID comprising a hydrolysis reactor R_{ID},
- a hydrodeoxygenation unit,
- a hydroisomerization unit
- a connection line LD between the hydrolysis unit ID and the hydrodeoxygenation unit,
- a connection line L between the hydrodeoxygenation unit and the hydroisomerization unit,
- possibly a product recycling line for the hydrodeoxygenation unit,
- possibly a product recycling line for the hydroisomerization unit.

Said units and lines are those previously described. Said biorefinery also comprises one or more of the following equipment: one or more heat exchanger(s), one or more heating system(s), one or more acid gas treatment unit(s), one or more fractionation unit(s) of the products obtained and one or more gas separation unit(s).

As specified above, the revamping method, object of the invention, the hydro-HDO/ISO unit obtained using the revamping method of the present invention and the new biorefinery, allow diesel to be obtained with optimum properties (a high cetane index, optimum cold properties, a high calorific value). A kerosene fraction and a naphtha fraction are also obtained, wherein said naphtha fraction can be used as such as gasoline base, maximizing its bio aliquots thanks to integration in the gasoline pool of the refinery, or sent to reforming, thus contributing to the hydrogen synthesis to be used in the hydro-HDO/ISO process. The new structure allows corrosion phenomena to be controlled, a lower hydrogen consumption, an increase in the productivity and the recovery of glycerine, as by-product, which can be commercially exploited.

## Claims

1. A method for converting a refinery comprising a system containing two hydrodesulfurization units, U1 and U2, into a biorefinery comprising a hydro-HDO/ISO unit for the production of hydrocarbon fractions from mixtures of a biological origin containing fatty acid glycerides, by hydrolysis of the mixture of a biological origin containing glycerides to glycerine and the corresponding fatty acids, hydrodeoxygenation of said acids after removal of the glycerine and subsequent isomerization, whereby the hydrolysis step is carried out by reacting the mixtures of a biological origin containing glycerides with water, without a catalyst, forming a mixture of fatty acids and glycerine, whereby the mixture of fatty acids and glycerine is biphasic and is composed of a denser aqueous phase containing glycerine and most of the impurities present in the starting charge and a less dense organic phase containing fatty acids, whereby the two phases are separated, the glycerine is recovered from the aqueous phase and the acids are fed to the HDO step, wherein each of the hydrodesulfurization units U1 and U2 comprises:
- a hydrodesulfurization reactor, (A1) for the unit U1, and (A2) for the unit U2, wherein said reactor contains a hydrodesulfurization catalyst,
- one or more heat exchangers between the feedstock and effluent of the reactor,
- a heating system of the feedstock upstream of the reactor,
- a treatment unit of acid gases downstream of the reactor, containing an absorber (B) for H₂S, said unit called T1 in the unit U1 and T2 in the unit U2
and wherein said method comprises:
- installing a unit ID, comprising a hydrolysis reactor R_{id}, for hydrolysing said fatty acid glycerides to fatty acids and glycerine and removing impurities, upstream of the unit U1,
- installing a connection line LD between the unit ID and the unit U1, for sending the fatty acids to the reactor 1A,
- possibly installing a product recycling line for the unit U1,
- possibly installing a product recycling line for the unit U2,
- installing a line L between the units U1 and U2, which connect them in series,
- substituting the hydrodesulfurization catalyst, in the reactor A1, with a hydrodeoxygenation catalyst,
- substituting, the hydrodesulfurization catalyst, in the reactor A2, with an isomerization catalyst,
- installing a by-pass line X of the treatment unit of acid gases T2 of the unit U2,
- substituting the absorber (B), in the unit for the treatment of acid gases T1, with a specific absorber for CO₂ and H₂S.

2. The method according to claim 1, wherein the hydrolysis reactor R_{ID} has the form of a column, with an inlet in the upper part for the feeding of water, an inlet in the lower part for feeding the mixture of a biological origin, an outlet on the top of the reactor for the fatty acids, connected to the line LD, and an outlet from the bottom for the water and glycerine.

3. The method according to claim 1 or 2, wherein a section for the dehydration of fatty acids is present on the line LD.

4. The method according to claim 2, wherein the outlet on the bottom of the reactor R_{ID} is connected, through a line LG, to a separation section S_{ID} comprising a flash and a distillation column for separating the water from the glycerine.

5. The method according to claim 1, for the conversion of a refinery comprising a system containing two hydrodesulfurization units, U1 and U2, into a biorefinery containing a hydro-HDO/ISO unit, wherein each of the hydrodesulfurization units U1 and U2 comprises:
- a hydrodesulfurization reactor, (A1) for the unit U1 and (A2) for the unit U2, wherein said reactor contains a hydrodesulfurization catalyst,
- one or more heat exchangers between the feedstock and effluent of the reactor,
- a heating system of the feedstock upstream of the reactor,
- a treatment unit of acid gases downstream of the reactor, containing an absorber (B) for H₂S, said unit called T1 in the unit U1 and T2 in the unit U2,
and wherein said method comprises:
- installing a unit ID, comprising a hydrolysis reactor R_{id}, upstream of the unit U1,
- installing a connecting line LD between the unit ID and the unit U1;
- installing a line L between the unit U1 and the unit U2 which connects them in series;
- possibly installing a product recycling line for the unit U1 and possibly installing a product recycling line for the unit U2;
- substituting the hydrodesulfurization catalyst, in the reactor A1, with a hydrodeoxygenation catalyst;
- substituting the hydrodesulfurization catalyst, in the reactor A2, with an isomerization catalyst;
- installing a by-pass line X of the treatment unit of acid gases T2 of the unit U2;
- substituting the absorber (B), in the unit for the treatment of acid gases T1, with a specific absorber for CO₂ and H₂S;
- installing a treatment unit of acid gases T3 downstream of the treatment unit of acid gases T1 in order to separate the H₂S;
- recycling the H₂S to the reactor A1.

6. The method according to claim 1 or 5 for the conversion of a refinery comprising a system containing two hydrodesulfurization units, U1 and U2, into a biorefinery containing a hydro-HDO/ISO unit, wherein each of the hydrodesulfurization units U1 and U2 comprises:
- a hydrodesulfurization reactor, (A1) for the unit U1 and (A2) for the unit U2, wherein said reactor contains a hydrodesulfurization catalyst,
- one or more heat exchangers between the feedstock and effluent of the reactor,
- a heating system of the feedstock upstream of the reactor,
- a treatment unit of acid gases downstream of the reactor, containing an absorber (B) for H₂S, said unit called T1 in the unit U1 and T2 in the unit U2,
- a hydrogen recycling line and a compressor on said line, said compressor called K1 for the unit U1 and K2 for the unit U2,
and wherein said method comprises:
- installing a unit ID, comprising a hydrolysis reactor R_{id}, upstream of the unit U1,
- installing a connecting line LD between the unit ID and the unit U1;
- installing a line L between the unit U1 and the unit U2 which connects them in series;
- possibly installing a product recycling line for the unit U1 and possibly installing a product recycling line for the unit U2;
- substituting the hydrodesulfurization catalyst, in the reactor A1, with a hydrodeoxygenation catalyst;
- substituting the hydrodesulfurization catalyst, in the reactor A2, with an isomerization catalyst;
- installing a by-pass line X of the treatment unit of acid gases T2 of the unit U2;
- substituting the absorber (B), in the unit for the treatment of acid gases T1, with a specific absorber for CO₂ and H₂S;
- installing a treatment unit of acid gases T3 downstream of the treatment unit of acid gases T1;
- installing a line R3 for recycling the H₂S from the unit T3 to the compressor K1 of the hydrogen recycling line of unit U1.

7. The method according to claim 6, wherein the treatment unit of acid gases T3 contains two absorbing areas each containing a specific absorber for CO₂.

8. The method according to claim 1, comprising:
- connecting the unit U1 to a sulfur recovery unit containing a thermal section and a catalytic section, by the installation, from the unit T1 of U1, of a by-pass line of the thermal section of said sulfur recovery unit;
- substituting the catalyst of the first reactor of the catalytic section of the sulfur recovery unit with a catalyst for cold selective redox.

9. The method according to claim 1, wherein a surge drum (S) is installed upstream of each of the reactors A1 and A2.

10. The method according to claim 1, wherein units U1 and U2 are used, containing high-pressure separators, low-pressure separators, stripping columns and possibly driers.

11. The method according to claim 1, wherein units U1 and U2 are used, containing lines for feeding make-up hydrogen, possibly after mixing with recycled hydrogen, to each of the reactors (A1) and (A2) and/or containing gas separation/washing units downstream of each of the reactors (A1) and (A2).

12. The method according to claim 11, wherein said lines for feeding hydrogen come from reforming units.

13. The method according to one or more of the previous claims, wherein the hydrocarbon fractions that can be obtained from the biorefinery are fuels or fuel components.

14. The method according to claim 13, wherein the fuel or fuel component that can be obtained from the biorefinery is a diesel fraction.

15. The method according to claim 14, wherein the diesel fraction contains a kerosene fraction and a gasoil fraction.

16. The method according to claim 14, wherein a naphtha fraction is also obtained.

17. The method according to one or more of the previous claims, wherein a product recycling line is installed for the unit U1, having a flow-rate not higher than half of the flow-rate of the line LD.

## Patentansprüche

1. Verfahren zur Umwandlung einer Raffinerie, umfassend ein System, das zwei Hydrodesulfurierungseinheiten, U1 und U2, enthält, in eine Bioraffinerie, umfassend eine Hydro-HDO-/ISO-Einheit für die Herstellung von Kohlenwasserstofffraktionen aus Mischungen von biologischem Ursprung, enthaltend Fettsäure-Glyceride, durch Hydrolyse der Mischung von biologischem Ursprung, enthaltend Glyceride, zu Glycerin und die entsprechenden Fettsäuren, Hydrodeoxygenierung der Säuren nach Entfernung des Glycerins und anschließende Isomerisierung, wobei der Hydrolyseschritt durchgeführt wird durch Umsetzung der Mischungen von biologischem Ursprung, enthaltend Glyceride, mit Wasser, ohne einen Katalysator, Bilden einer Mischung von Fettsäuren und Glycerin, wobei die Mischung von Fettsäuren und Glycerin zweiphasig ist und aus einer dichteren wässrigen Phase, enthaltend Glycerin und die meisten Verunreinigungen, die in der Ausgangsladung enthaltend sind, und aus einer weniger dichten organischen Phase, enthaltend Fettsäuren, besteht, wobei die zwei Phase getrennt sind, das Glycerin wird zurückgewonnen aus der wässrigen Phase und die Säuren werden in den HDO-Schritt eingespeist, worin jede der Hydrodesulfurierungseinheiten U1 und U2 umfasst:
- einen Hydrodesulfurierungsreaktor, (A1) für die Einheit U1, und (A2) für die Einheit U2, wobei der Reaktor einen Hydrodesulfurierungskatalysator enthält,
- einen oder mehrere Wärmeaustauscher zwischen der Einspeisung und dem Ausfluss des Reaktors,
- ein Erwärmungssystem für die Einspeisung stromaufwärts von dem Reaktor,
- eine Behandlungseinheit für Säuregase stromabwärts von dem Reaktor, und enthaltend einen Absorber (B) für H₂S, wobei die Einheit in der Einheit U1 als T1 und in der Einheit U2 als T2 bezeichnet wird,
und wobei das Verfahren umfasst:
- Einrichten einer Einheit ID, umfassend einen Hydrolyse-Reaktor R_{id}, für die Hydrolyse der Fettsäure-Glyceride in Fettsäuren und Glycerin und Entfernung von Verunreinigungen, stromaufwärts von der Einheit U1,
- Einrichten einer Verbindungsleitung LD zwischen der Einheit ID und der Einheit U1, um die Fettsäuren an den Reaktor 1A weiterzuleiten,
- gegebenenfalls Einrichten einer Produkt-Recycling-Leitung für die Einheit U1,
- gegebenenfalls Einrichten einer Produkt-Recycling-Leitung für die Einheit U2,
- Einrichten einer Leitung L zwischen den Einheiten U1 und U2, die diese in Serie verbindet,
- Ersetzen des Hydrodesulfurierungskatalysators in dem Reaktor A1 mit einem Hydrodeoxygenierungskatalysator,
- Ersetzen des Hydrodesulfurierungskatalysators in dem Reaktor A2 mit einem Isomerisierungskatalysator,
- Einrichten einer Umführungsleitung X der Behandlungseinheit der Säuregase T2 der Einheit U2,
- Ersetzen des Absorbers (B) in der Einheit für die Behandlung von Säuregasen T1 mit einem spezifischen Absorber für CO₂ und H₂S.

2. Verfahren nach Anspruch 1, worin der Hydrolyse-Reaktor R_{ID} die Form einer Säule hat, mit einer Einleitung im oberen Teil zum Einspeisen von Wasser, einer Einleitung im unteren Teil zum Einspeisen der Mischung von biologischem Ursprung, einem Auslass am Kopf des Reaktors für die Fettsäuren, verbunden mit der Leitung LD, und ein Auslass vom Boden für Wasser und Glycerin.

3. Verfahren nach Anspruch 1 oder 2, worin eine Sektion für die Dehydrierung von Fettsäuren auf der Leitung LD vorliegt.

4. Verfahren nach Anspruch 2, worin der Auslass am Boden des Reaktors R_{ID} verbunden ist über eine Leitung LG mit einer Trennungssektion S_{ID}, umfassend eine Flash- und eine Destillierssäule, zum Abtrennen von Wasser von dem Glycerin.

5. Verfahren nach Anspruch 1, zur Umwandlung einer Raffinerie, umfassend ein System, enthaltend zwei Hydrodesulfurierungseinheiten, U1 und U2, in eine Bioraffinerie, umfassend eine Hydro-HDO-/ISO-Einheit, wobei jede der Hydrodesulfurierungseinheiten U1 und U2 umfasst:
- einen Hydrodesulfurierungsreaktor, (A1) für die Einheit U1, und (A2) für die Einheit U2, wobei der Reaktor einen Hydrodesulfurierungskatalysator enthält,
- einen oder mehrere Wärmeaustauscher zwischen der Einspeisung und dem Ausfluss des Reaktors,
- ein Erwärmungssystem für die Einspeisung stromaufwärts von dem Reaktor,
- eine Behandlungseinheit für Säuregase stromabwärts von dem Reaktor, enthaltend einen Absorber (B) für H₂S, wobei die Einheit in der Einheit U1 als T1 und in der Einheit U2 als T2 bezeichnet wird,
und wobei das Verfahren umfasst:
- Einrichten einer Einheit ID, umfassend einen Hydrolyse-Reaktor R_{id}, stromaufwärts von der Einheit U1,
- Einrichten einer Verbindungsleitung LD zwischen der Einheit ID und der Einheit U1;
- Einrichten einer Leitung L zwischen den Einheiten U1 und U2, die diese in Serie verbindet;
- gegebenenfalls Einrichten einer Produkt-Recycling-Leitung für die Einheit U1 und gegebenenfalls Einrichten einer Produkt-Recycling-Leitung für die Einheit U2;
- Ersetzen des Hydrodesulfurierungskatalysators in dem Reaktor A1 mit einem Hydrodeoxygenierungskatalysator;
- Ersetzen des Hydrodesulfurierungskatalysators in dem Reaktor A2 mit einem Isomerisierungskatalysator;
- Einrichten einer Umführungsleitung X der Behandlungseinheit der Säuregase T2 der Einheit U2;
- Ersetzen des Absorbers (B) in der Einheit für die Behandlung von Säuregasen T1 mit einem spezifischen Absorber für CO₂ und H₂S;
- Einrichten einer Behandlungseinheit für Säuregasse T3 stromabwärts von der Behandlungseinheit der Säuregasse T1, um H₂S abzutrennen;
- Rezyklieren des H2S in den Reaktor A1.

6. Verfahren nach Anspruch 1 oder 5 zur Umwandlung einer Raffinerie, umfassend ein System, enthaltend zwei Hydrodesulfurierungseinheiten, U1 und U2, in eine Bioraffinerie, enthaltend eine Hydro-HDO-/ISO-Einheit, wobei jede der Hydrodesulfurierungseinheiten U1 und U2 umfasst:
- einen Hydrodesulfurierungsreaktor, (A1) für die Einheit U1, und (A2) für die Einheit U2, wobei der Reaktor einen Hydrodesulfurierungskatalysator enthält,
- einen oder mehrere Wärmeaustauscher zwischen der Einspeisung und dem Ausfluss des Reaktors,
- ein Erwärmungssystem für die Einspeisung stromaufwärts von dem Reaktor,
- eine Behandlungseinheit für Säuregase stromabwärts von dem Reaktor, enthaltend einen Absorber (B) für H₂S, wobei die Einheit in der Einheit U1 als T1 und in der Einheit U2 als T2 bezeichnet wird,
- eine Wasserstoff-Recycling-Leitung und einen Kompressor auf dieser Leitung, wobei der Kompressor für die Einheit U1 als K1 und für die Einheit U2 als K2 bezeichnet wird,
und wobei das Verfahren umfasst:
- Einrichten einer Einheit ID, umfassend einen Hydrolyse-Reaktor R_{id}, stromaufwärts von der Einheit U1,
- Einrichten einer Verbindungsleitung LD zwischen der Einheit ID und der Einheit U1;
- Einrichten einer Leitung L zwischen den Einheiten U1 und der Einheit U2, die diese in Serie verbindet;
- gegebenenfalls Einrichten einer Produkt-Recycling-Leitung für die Einheit U1 und gegebenenfalls Einrichten einer Produkt-Recycling-Leitung für die Einheit U2;
- Ersetzen des Hydrodesulfurierungskatalysators in dem Reaktor A1 mit einem Hydrodeoxygenierungskatalysator;
- Ersetzen des Hydrodesulfurierungskatalysators in dem Reaktor A2 mit einem Isomerisierungskatalysator;
- Einrichten einer Umführungsleitung X der Behandlungseinheit der Säuregase T2 der Einheit U2;
- Ersetzen des Absorbers (B) in der Einheit für die Behandlung von Säuregasen T1 mit einem spezifischen Absorber für CO₂ und H₂S;
- Einrichten einer Behandlungseinheit für Säuregase T3 stromabwärts von der Behandlungseinheit der Säuregase T1;
- Einrichten einer Leitung R3 zum Recyclen des H₂S aus der Einheit T3 zum Kompressor K1 der Wasserstoff-Recycling-Leitung der Einheit U1.

7. Verfahren nach Anspruch 6, wobei die Behandlungseinheit für Säuregasse T3 zwei absorbierende Bereiche enthält, jeweils enthaltend einen spezifischen Absorber für CO₂.

8. Verfahren nach Anspruch 1, umfassend:
- Verbinden der Einheit U1 mit einer Schwefelrückgewinnungseinheit, enthaltend einen thermalen Bereich und einen katalytischen Bereich durch die Installation, von der Einheit T1 von U1, einer Umführungsleitung des thermalen Bereichs der Schwefelrückgewinnungseinheit;
- Ersetzen des Katalysators des ersten Reaktors der katalytischen Sektion der Schwefelrückgewinnungseinheit mit einem Katalysator für kalten selektiven Redox.

9. Verfahren nach Anspruch 1, worin ein Abscheider (S) stromaufwärts von jedem der Reaktoren A1 und A2 eingerichtet wird.

10. Verfahren nach Anspruch 1, worin Einheiten U1 und U2 verwendet werden, enthaltend Hochdruckseparatoren, Niedrigdruckseparatoren, Stripp-Säulen und gegebenenfalls Trockner.

11. Verfahren nach Anspruch 1, worin Einheiten U1 und U2 verwendet werden, enthaltend Leitungen zum Einspeisen von Auffrisch-Wasserstoff, gegebenenfalls nach Vermischen mit rezykliertem Wasserstoff, in jeden der Reaktoren (A1) und (A2) und/oder enthaltend Gasabtrenn-/Wascheinheiten stromabwärts von jedem der Reaktoren (A1) und (A2).

12. Verfahren nach Anspruch 11, worin die Leitungen zum Einspeisen von Wasserstoff aus Reformiereinheiten stammen.

13. Verfahren nach irgendeinem der vorhergehenden Ansprüche, worin die Kohlenwasserstofffraktionen, die aus der Bioraffinerie erhalten werden können, Brennstoff oder Brennstoffbestandteile sind.

14. Verfahren nach Anspruch 13, worin der Brennstoff oder Brennstoffbestandteil, der aus der Bioraffinerie erhalten werden kann, eine Dieselfraktion ist.

15. Verfahren nach Anspruch 14, wobei die Dieselfraktion eine Kerosinfraktion und eine Gasölfraktion enthält.

16. Verfahren nach Anspruch 14, worin auch eine Naphthafraktion erhalten wird.

17. Verfahren nach einem oder mehreren der vorhergehenden Ansprüche, worin eine Produkt-Recycling-Leitung für die Einheit U1 eingerichtet wird, mit einer Fließrate nicht größer als die Hälfte der Fließrate der Leitung LD.

## Revendications

1. Procédé de conversion d'une raffinerie qui comprend un système comportant deux unités d'hydrodésulfuration, U1 et U2, en une bioraffinerie comprenant une unité hydro-HDO/ISO destinée à la production de fraction d'hydrocarbures à partir de mélanges d'origine biologique contenant des glycérides d'acides gras, par hydrolyse d'un mélange d'origine biologique contenant des glycérides en glycérol et acides gras correspondants, hydrodésoxygénation de ces acides après élimination du glycérol, et isomérisation ultérieure, étant entendu que l'on réalise l'étape d'hydrolyse en faisant réagir avec de l'eau, sans catalyseur, le mélange d'origine biologique contenant des glycérides, ce qui donne un mélange d'acides gras et de glycérol, lequel mélange d'acides gras et de glycérol est biphasique, constitué d'une phase aqueuse plus dense, qui contient le glycérol et la plus grande partie des impuretés présentes dans la charge de départ, et d'une phase organique moins dense qui contient les acides gras, on sépare ces deux phases, on récupère le glycérol de la phase aqueuse, et l'on envoie les acides à l'étape d'hydrodésoxygénation, et étant entendu que chacune des unités d'hydrodésulfuration U1 et U2 comprend :
- un réacteur d'hydrodésulfuration, A1 dans l'unité U1 et A2 dans l'unité U2, lequel réacteur renferme un catalyseur d'hydrodésulfuration,
- un ou plusieurs dispositif(s) d'échange thermique entre l'alimentation et l'effluent du réacteur,
- un dispositif de chauffage de l'alimentation, placé en amont du réacteur,
- et une unité de traitement des gaz acides, placée en aval du réacteur et renfermant un absorbeur (B) de sulfure d'hydrogène H₂S, laquelle unité est appelée T1 dans l'unité U1 et T2 dans l'unité U2,
et lequel procédé comporte les étapes suivantes :
- installer, en amont de l'unité U1, une unité ID comprenant un réacteur d'hydrolyse R_{ID}, pour hydrolyser lesdits glycérides d'acides gras en acides gras et glycérol et éliminer les impuretés,
- installer une conduite de raccordement LD entre l'unité ID et l'unité U1, pour amener les acides gras au réacteur A1,
- installer éventuellement une conduite de recyclage de produit pour l'unité U1,
- installer éventuellement une conduite de recyclage de produit pour l'unité U2,
- installer entre les unités U1 et U2 une conduite L qui les raccorde en série,
- remplacer, dans le réacteur A1, le catalyseur d'hydrodésulfuration par un catalyseur d'hydrodésoxygénation,
- remplacer, dans le réacteur A2, le catalyseur d'hydrodésulfuration par un catalyseur d'isomérisation,
- installer une conduite X de dérivation de l'unité T2 de traitement des gaz acides de l'unité U2,
- et remplacer, dans l'unité T1 de traitement des gaz acides, l'absorbeur (B) par un absorbeur spécifique de dioxyde de carbone CO₂ et de sulfure d'hydrogène H₂S.

2. Procédé conforme à la revendication 1, dans lequel le réacteur d'hydrolyse R_{ID} se présente sous la forme d'une colonne munie, dans sa partie supérieure, d'une entrée pour l'alimentation en eau, et dans sa partie inférieure, d'une entrée pour l'alimentation en mélange d'origine biologique, ainsi que, au sommet du réacteur, d'une sortie pour les acides gras, et à la base du réacteur, d'une sortie pour l'eau et le glycérol.

3. Procédé conforme à la revendication 1 ou 2, dans lequel il y a, sur la conduite LD, une section de déshydratation des acides gras.

4. Procédé conforme à la revendication 2, dans lequel la sortie à la base du réacteur R_{ID} est raccordée, par une conduite LG, à une section de séparation S_{ID} comportant un dispositif de détente et une colonne de distillation pour séparer l'eau du glycérol.

5. Procédé, conforme à la revendication 1, de conversion d'une raffinerie qui comprend un système comportant deux unités d'hydrodésulfuration, U1 et U2, en une bioraffinerie comprenant une unité hydro-HDO/ISO, dans lequel chacune des unités d'hydrodésulfuration U1 et U2 comprend :
- un réacteur d'hydrodésulfuration, A1 dans l'unité U1 et A2 dans l'unité U2, lequel réacteur renferme un catalyseur d'hydrodésulfuration,
- un ou plusieurs dispositif(s) d'échange thermique entre l'alimentation et l'effluent du réacteur,
- un dispositif de chauffage de l'alimentation, placé en amont du réacteur,
- et une unité de traitement des gaz acides, placée en aval du réacteur et renfermant un absorbeur (B) de sulfure d'hydrogène H₂S, laquelle unité est appelée T1 dans l'unité U1 et T2 dans l'unité U2,
et lequel procédé comporte les étapes suivantes :
- installer, en amont de l'unité U1, une unité ID comprenant un réacteur d'hydrolyse R_{ID},
- installer une conduite de raccordement LD entre l'unité ID et l'unité U1,
- installer entre les unités U1 et U2 une conduite L qui les raccorde en série,
- installer éventuellement une conduite de recyclage de produit pour l'unité U1, et installer éventuellement une conduite de recyclage de produit pour l'unité U2,
- remplacer, dans le réacteur A1, le catalyseur d'hydrodésulfuration par un catalyseur d'hydrodésoxygénation,
- remplacer, dans le réacteur A2, le catalyseur d'hydrodésulfuration par un catalyseur d'isomérisation,
- installer une conduite X de dérivation de l'unité T2 de traitement des gaz acides de l'unité U2,
- remplacer, dans l'unité T1 de traitement des gaz acides, l'absorbeur (B) par un absorbeur spécifique de dioxyde de carbone CO₂ et de sulfure d'hydrogène H₂S,
- installer, en aval de l'unité T1 de traitement des gaz acides, une unité T3 de traitement des gaz acides, pour séparer le sulfure d'hydrogène H₂S,
- et recycler ce sulfure d'hydrogène en le renvoyant dans le réacteur A1.

6. Procédé, conforme à la revendication 1 ou 5, de conversion d'une raffinerie qui comprend un système comportant deux unités d'hydrodésulfuration, U1 et U2, en une bioraffinerie comprenant une unité hydro-HDO/ISO, dans lequel chacune des unités d'hydrodésulfuration U1 et U2 comprend :
- un réacteur d'hydrodésulfuration, A1 dans l'unité U1 et A2 dans l'unité U2, lequel réacteur renferme un catalyseur d'hydrodésulfuration,
- un ou plusieurs dispositif(s) d'échange thermique entre l'alimentation et l'effluent du réacteur,
- un dispositif de chauffage de l'alimentation, placé en amont du réacteur,
- une unité de traitement des gaz acides, placée en aval du réacteur et renfermant un absorbeur (B) de sulfure d'hydrogène H₂S, laquelle unité est appelée T1 dans l'unité U1 et T2 dans l'unité U2,
- et une conduite de recyclage d'hydrogène et un compresseur placé sur cette conduite, lequel compresseur est appelé K1 dans l'unité U1 et K2 dans l'unité U2,
et lequel procédé comporte les étapes suivantes :
- installer, en amont de l'unité U1, une unité ID comprenant un réacteur d'hydrolyse R_{ID},
- installer une conduite de raccordement LD entre l'unité ID et l'unité U1,
- installer entre les unités U1 et U2 une conduite L qui les raccorde en série,
- installer éventuellement une conduite de recyclage de produit pour l'unité U1, et installer éventuellement une conduite de recyclage de produit pour l'unité U2,
- remplacer, dans le réacteur A1, le catalyseur d'hydrodésulfuration par un catalyseur d'hydrodésoxygénation,
- remplacer, dans le réacteur A2, le catalyseur d'hydrodésulfuration par un catalyseur d'isomérisation,
- installer une conduite X de dérivation de l'unité T2 de traitement des gaz acides de l'unité U2,
- remplacer, dans l'unité T1 de traitement des gaz acides, l'absorbeur (B) par un absorbeur spécifique de dioxyde de carbone CO₂ et de sulfure d'hydrogène H₂S,
- installer, en aval de l'unité T1 de traitement des gaz acides, une unité T3 de traitement des gaz acides,
- et installer une conduite R3 pour recycler le sulfure d'hydrogène issu de l'unité T3 en le renvoyant vers le compresseur K1 placé sur la conduite de recyclage d'hydrogène de l'unité U1.

7. Procédé conforme à la revendication 6, dans lequel l'unité T3 de traitement des gaz acides comporte deux zones d'absorption contenant chacune un absorbeur spécifique de dioxyde de carbone CO₂.

8. Procédé conforme à la revendication 1, comportant les étapes suivantes :
- raccorder l'unité U1 à une unité de récupération de soufre comportant une section thermique et une section catalytique, en installant, partant de l'unité T1 de U1, une conduite de dérivation de la section thermique de ladite unité de récupération de soufre,
- et remplacer le catalyseur du premier réacteur de la section catalytique de l'unité de récupération de soufre par un catalyseur d'oxydo-réduction sélective à froid.

9. Procédé conforme à la revendication 1, dans lequel on installe un réservoir tampon (S) en amont de chacun des réacteurs A1 et A2.

10. Procédé conforme à la revendication 1, dans lequel on utilise des unités U1 et U2 qui comportent des séparateurs haute pression, des séparateurs basse pression, des colonnes de rectification, et éventuellement, des séchoirs.

11. Procédé conforme à la revendication 1, dans lequel on utilise des unités U1 et U2 qui comportent des conduites amenant à chacun des réacteurs A1 et A2 de l'hydrogène de complément, éventuellement après mélange avec de l'hydrogène recyclé, et/ou des unités de séparation/lavage de gaz, placées en aval de chacun des réacteurs A1 et A2.

12. Procédé conforme à la revendication 11, dans lequel lesdites conduites amenant de l'hydrogène partent d'unités de reformage.

13. Procédé conforme à l'une ou plusieurs des revendications précédentes, dans lequel les fractions d'hydrocarbures que l'on peut obtenir dans la bioraffinerie sont des carburants ou des composants de carburant.

14. Procédé conforme à la revendication 13, dans lequel le carburant ou composant de carburant que l'on peut obtenir dans la bioraffinerie est une fraction de carburant diesel.

15. Procédé conforme à la revendication 14, dans lequel la fraction de carburant diesel contient une fraction de kérosène et une fraction de gazole.

16. Procédé conforme à la revendication 14, dans lequel on obtient aussi une fraction de naphta.

17. Procédé conforme à l'une ou plusieurs des revendications précédentes, dans lequel on installe, pour l'unité U1, une conduite de recyclage de produit dont le débit ne dépasse pas la moitié du débit de la conduite LD.
